# EUROPEAN PATENT SPECIFICATION

(11) **EP 2 843 284 B1**
(45) Date of publication and mention of the grant of the patent: **13.09.2017**
(21) Application number: 13780867.1
(22) Date of filing: 26.04.2013
(51) Int. Cl.: F25B 41/00, F16L 57/00, F16L 19/08, F16L 19/10, F16L 19/12, F16L 21/08, F16L 55/10

(54) **PIPE JOINT, CLOSING VALVE AND LOOSENING TOOL**
ROHRVERBINDUNG, SCHLIESSVENTIL UND LÖSEWERKZEUG
RACCORD DE TUYAU, ROBINET DE FERMETURE ET OUTIL DE DESSERRAGE

(30) Priority: 27.04.2012 JP 2012103669; 27.04.2012 JP 2012103673; 27.04.2012 JP 2012103676; 21.03.2013 JP 2013057566; 21.03.2013 JP 2013057571; 21.03.2013 JP 2013057573
(43) Date of publication of application: 04.03.2015
(73) Proprietor: NASCO FITTING CO., LTD., Aichi 455-0053 (JP); CHIYODA KUCHOKIKI CO., LTD., Osaka 599-8247 (JP)
(72) Inventor: MIZUGUCHI, Norio, Nagoya-shi Aichi 455-0053 (JP); SASAYAMA, Takashi, Nagoya-shi Aichi 455-0053 (JP); ITO, Yoshihiro, Nagoya-shi Aichi 455-0053 (JP); OZAKI, Shinji, Sakai-shi Osaka 599-8247 (JP); DOI, Chisako, Sakai-shi Osaka 599-8247 (JP)
(74) Representative: Müller-Boré & Partner Patentanwälte PartG mbB
(86) International application number: PCT/JP2013/062415
(87) International publication number: WO 2013/162005

(56) References cited:
- EP-A1- 2 072 876
- DE-A1-102008 053 380
- DE-B- 1 214 489
- JP-A- 2001 108 170
- JP-A- 2003 232 474
- JP-A- 2005 325 872
- JP-A- 2010 190 325
- US-A- 1 927 464
- US-B1- 7 353 840

## Description

### Technical Field

The present invention relates to a pipe joint and a closing valve.

### Background Art

In a heat exchanger such as an air conditioner, refrigerant is caused to flow along a circulation passage constructed by connecting between heat exchanging units by a pipe. Closing valves are provided for connecting the heat exchanging units to the pipe. The closing valve includes a housing formed with a flow path of the refrigerant, a valve function unit opening and closing the flow path and a pipe joint (a joint function unit) for connecting a pipe.

One of existing pipe joints includes a cylindrical joint body which constitutes one end of the flow path and is formed with a tapered sealing surface. The existing pipe joint is structured so that a connecting end of the pipe which is deformed so as to be diametrically enlarged into a flared shape is caused to adhere to the tapered sealing surface and is tightened by a nut. However, the connecting structure by the tapered sealing surface and the flared connecting end is easy to cause leakage of refrigerant (Freon gas or the like). Since leakage of refrigerant causes destruction of global environment such as global warming and destruction of ozone layer, a countermeasure against refrigerant leakage is a momentous issue.

The applicant proposed a closing valve disclosed in Patent Document 1 as the closing valve provided with a pipe joint which dramatically reduces an amount of refrigerant leakage. This pipe joint includes a cylindrical joint body constituting one end of the flow path, a cylindrical clamping member screwed into the joint body, a metal ferrule surrounding a pipe inserted into the clamping member and the joint body, and a diameter reducing unit.

The diameter reducing unit has a tapered surface whose diameter is reduced in the pipe insertion direction. When the clamping member is screw-inserted, the ferrule is deformed in the diameter-reducing direction by the tapered surface thereby to airtightly adhere to the inner periphery of the joint body and to bite into an outer periphery of the pipe with its free movement being prevented and to also airtightly adhere to the outer periphery of the pipe. Thus, the structure of connecting the pipe with the ferrule being diameter-reduced is exceedingly effective from the point of prevention of refrigerant leakage.

### Prior Art Document

### Patent Documents

Patent Document 1: Japanese Patent Application Publication No. JP-A-2005-325872

US 1 927 464 A discloses a compression coupling designed for the use with small copper tubing and to be durable under severe vibration, as in airplanes, automobiles, etc.

DE 12 14 489 B discloses a pipe coupling with a cutting ring which acts as a sealing ring, wherein the cutting ring cuts into the surface of a tube when tightening a screw on the coarse thread of the connection piece and cooperating with a support ring coupling nut.

EP 2 072 876 A1 discloses a pipe joint that has a joint body attached to a device to which a pipe is connected, a coupling member threaded with the joint body, and a fastening jig through which rotational torque is transmitted to the coupling member. The outer surface of the coupling member is round so that the coupling member cannot be held by a tool. The rotational torque is applied to the fastening jig from the exterior by means of the tool. After the coupling member is fastened to the joint body, the fastening jig is removed from the coupling member.

US 7 353 840 B1 discloses an internally threaded split nut having an arcuate gap defining an opening large enough to pass over the outside diameter of a first tubular conduit or elongate rod section from the side, the split nut then being coaxially alignable and threadedly engageable with a cooperatively second threaded conduit or rod section having an outside diameter greater than that of the first section. Use of the subject split nut to releasably secure a.water supply valve assembly having a REHAU(R) hose barb fitting to a wall of an in-wall appliance outlet box is also disclosed.

DE 10 2008 053380 A1 discloses a connection that has a common line axis and the line axis includes a junction in a connection socket. The junction has a receiving area. The line axis is locked by a holding element which pierces the junction and the connection socket radially. The holding element is formed by a segment nut which surrounds the connection of terminals.

### Summary of the Invention

### Problem to Be Overcome By the Invention

The clamping member is screwed using a general-purpose tool such as a spanner or an adjustable wrench thereby to be mounted to the joint body in the above-described pipe joint. Accordingly, the clamping member is likely to be turned in the loosening direction by mistake. In this case, there is a concern that the sealing performance of the ferrule would be reduced with the result of refrigerant leakage. As a countermeasure, a locking unit is considered to be provided which prevents the clamping member from being rotated in the loosening direction by the general-purpose tool. On the other hand, however, when the heat exchanger is relocated or replaced, the clamping member needs to be rotated in the loosening direction in order that the pipe may be detached after release from airtightness by the ferrule. However, the clamping member cannot be rotated in the loosening direction when the locking unit is provided.

Further, the clamping member is mounted to the joint body by screwing in the above-described pipe joint. In order to tighten the clamping member reliably, the worker fits the tool with the joint body by one hand and fits another tool with the clamping member by the other hand, thereby carrying out the clamping work. On the other hand, the inner diameter of the joint body is provided with a clearance in order that the pipe may be smoothly inserted. Accordingly, there is a concern that the pipe may drop out of the joint body until clamping starts after the pipe has been inserted and the tools have been fitted with the joint body and the clamping member, respectively, with the result that the workability is reduced.

The first invention was made in view of the foregoing circumstances and an object thereof is to provide a pipe joint which can retain airtightness by the ferrule even in the use of a general-purpose tool and can remove the airtightness by the ferrule if necessary. Further, an object of the second invention is to improve the workability.

### Means for Overcoming the Problem

A pipe joint of a first invention which includes a cylindrical joint body into which a pipe is inserted and which is configured to be capable of communicating with a refrigerant flow path of a heat exchanging unit, a cylindrical fixing member mounted to the joint body by screwing, a ferrule receiving an axial pressing force from the fixing member screwed in a clamping direction, thereby airtightly sealing a gap between an inner periphery of the joint body and an outer periphery of the pipe, and a clamping nut capable of applying a rotative force in the clamping direction to the fixing member when rotated by fitting a general-purpose tool to a fitting portion formed on an outer periphery thereof, is characterized by a loosening thread formed on an outer periphery of the fixing member and threaded in a direction opposed to a direction in which the joint body and the fixing member are threaded, and a screw-in preventing portion abutting against a loosening tool thereby to prevent further screw-in when the loosening tool is screwed into the loosening thread and rotated in a direction opposed to a clamping direction of the fixing member.

A closing valve of the first invention which includes a housing mounted to a heat exchanging unit, a refrigerant flow path formed in the housing, a valving element opening and closing the flow path, a cylindrical joint body which is formed in the housing so as to communicate with the flow path and into which a pipe is inserted, a cylindrical fixing member mounted to the joint body by screwing and a ferrule receiving an axial pressing force from the fixing member screwed in a clamping direction, thereby airtightly sealing a gap between an inner periphery of the joint body and an outer periphery of the pipe, and a clamping nut capable of applying a rotative force in the clamping direction to the fixing member when rotated by fitting a general-purpose tool to a fitting portion formed on an outer periphery thereof, is characterized by a loosening thread formed on an outer periphery of the fixing member and threaded in a direction opposed to a direction in which the joint body and the fixing member are threaded, and a screw-in preventing portion abutting against a loosening tool thereby to prevent further screw-in when the loosening tool is screwed into the loosening thread and rotated in a direction opposed to a clamping direction of the fixing member.

A pipe joint of a second invention which includes a cylindrical joint body which communicates with a refrigerant flow path of a heat exchanging unit and has a hollow interior serving as an insertion space into which a pipe is inserted, a cylindrical clamping member mounted to the joint body by screwing and constituting the insertion space, and a ferrule receiving an axial pressing force from the clamping member screwed in a clamping direction, thereby airtightly sealing a gap between an inner periphery of the joint body and an outer periphery of the pipe, is characterized by a holding unit abutting against the pipe inserted into the insertion space thereby to be capable of holding the pipe in a retained state.

A closing valve of the second invention which includes a housing mounted to a heat exchanging unit, a refrigerant flow path formed in the housing, a valving element opening and closing the flow path, a cylindrical joint body which is formed in the housing so as to communicate with the flow path and has a hollow interior serving as an insertion space into which a pipe is inserted, a cylindrical clamping member mounted to the joint body by screwing and constituting the insertion space, and a ferrule receiving an axial pressing force from the clamping member screwed in a clamping direction, thereby airtightly sealing a gap between an inner periphery of the joint body and an outer periphery of the pipe, is characterized by a holding unit abutting against the pipe inserted into the insertion space thereby to be capable of holding the pipe in a retained state.

### Effect of the Invention

According to the pipe joint and the closing valve of the first invention, when the tool is fitted with the fitting portion so that the clamping nut applies a rotative force in the clamping direction to the fixing member, the ferrule is pressed by the fixing member to seal the gap between the inner periphery of the joint body and the outer periphery of the pipe, with the result that the flow path and the pipe are connected to each other. The general-purpose tool means any tool fittable with a regular hexagonal outer periphery, such as a spanner or an adjustable wrench.

When airtightness by the ferrule is released and the pipe is detached, the loosening tool is screwed into and rotated in the direction opposed to the clamping direction of the fixing member thereby to be abutted against the screw-in preventing portion. This prevents further screwing of the loosening tool, that is, rotation relative to the fixing member. Accordingly, when rotation of the loosening tool is further continued in this state, the fixing member is rotated together with the loosening tool in the direction opposed to the clamping direction, that is, in the loosening direction, with the result that the airtightness by the ferrule is released. According to the invention, the airtightness by the ferrule is released using the dedicated loosening tool.

According to the pipe joint and the closing valve of the second invention, the pipe inserted into the insertion space can be held so as to be prevented from dropout. Accordingly, there is no possibility that the pipe would drop out during a time period from insertion of the pipe to start of the work to clamp the clamping member, with the result that the pipe joint and the closing valve are superior in terms of the workability.

### Brief Description of the Drawings

Fig. 1 is a sectional view of the pipe joint of embodiment 1, showing the state where a disengagement preventing member is mounted on the housing;
Fig. 2 is a sectional view of the pipe joint, showing the state where the loosened clamping nut is prevented from disengagement from the joint body by the disengagement preventing member;
Fig. 3 is a sectional view of the pipe joint, showing the state where the disengagement preventing member is detached from the housing;
Fig. 4 is a sectional view of the pipe joint, showing the state where the pipe inserted into the joint body is held;
Fig. 5 is a sectional view of the pipe joint, showing the state where the pipe is correctly connected to the pipe joint;
Fig. 6 is a sectional view of the pipe joint, showing the case where the fixing member is not loosened even when the clamping nut has come off in the state where the pipe is connected to the pipe joint;
Fig. 7 is a sectional view of the pipe joint, showing the state where the clamping nut is detached and the cover is moved rearward and the loosening tool is inserted into the pipe;
Fig. 8 is a sectional view of the pipe joint, showing the state where the loosening tool is screwed into the fixing member;
Fig. 9 is a sectional view of the pipe joint, showing the state where the fixing member is detached from the joint body by the loosening tool;
Fig. 10 is a sectional view of a locking member;
Fig. 11 is a rear view of the loosening tool;
Fig. 12 is a sectional view of the pipe joint of embodiment 2, showing the state where the pipe is connected to the pipe joint;
Fig. 13 is a sectional view of the pipe joint, showing the state where the clamping nut and the cover have been detached from the fixing member;
Fig. 14 is a sectional view of the pipe joint of embodiment 3, showing the state where the pipe is connected to the pipe joint;
Fig. 15 is a sectional view of the pipe joint, showing the state where the clamping nut and the cover have been detached from the fixing member;
Fig. 16 is a sectional view of the pipe joint of embodiment 4, showing the state where the clamping nut and the cover have been detached from the fixing member;
Fig. 17 is a sectional view of the pipe joint of embodiment 5, showing the state where the clamping nut and the cover have been detached from the fixing member;
Fig. 18 is a sectional view of the pipe joint of embodiment 6, showing the state where the clamping nut and the cover have been detached from the fixing member;
Fig. 19 is a sectional view of the pipe joint of embodiment 7, showing the state where the pipe is connected to the pipe joint;

### Embodiment 1

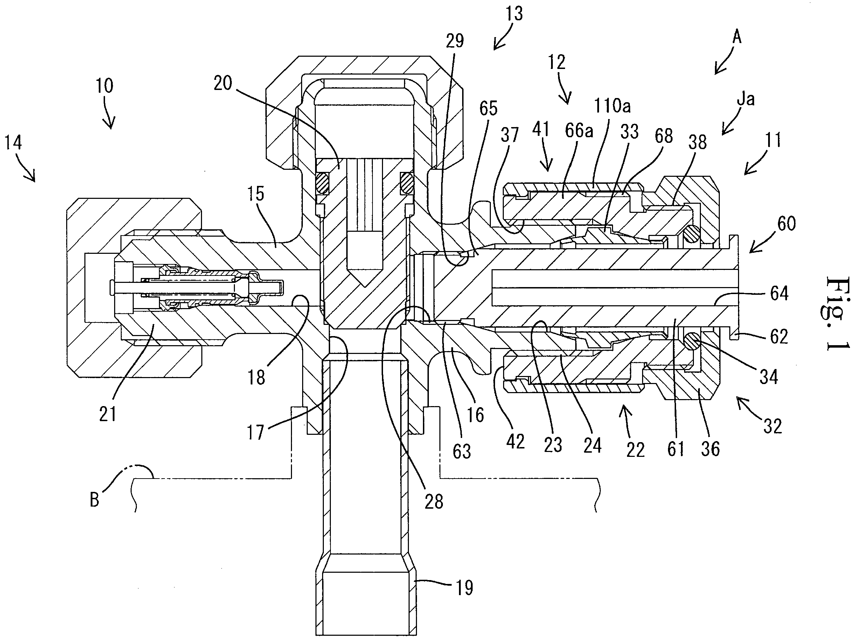

Embodiment 1 of the present invention will be described with reference to Figs. 1 to 11.

### Application of pipe joint Ja

A pipe joint Ja of embodiment 1 is applied to a household air conditioner (a heat exchanger) in which an outdoor unit B as a heat exchanging unit provided with a compressor and a condenser is connected to an indoor unit as a heat exchanging unit (not shown) provided with an expansion valve and an evaporator by a metal (copper or copper alloy) pipe P. A circulation passage is constituted by the outdoor unit B, the indoor unit and the pipe P, and a refrigerant (Freon gas) is circulated through the circulation passage so that heat exchange is carried out. The pipe joint Ja is provided for connecting a closing valve A of the outdoor unit B to the pipe P. The pipe joint Ja is provided integrally with a closing valve A as a joint function unit composing the closing valve A.

### Overall structure of closing valve A

The closing valve A structurally includes a valve body 10 and a lock member 11 as shown in Fig. 1. The closing valve A functionally includes the pipe joint Ja, a first valve function unit 13 and a second valve function unit 14. The pipe joint Ja can function as a single-function pipe joint when being separated from the first and second valve function units 13 and 14.

### Valve body 10

The valve body 10 includes a brass housing 15, the first valve function unit 13 (an on-off valve), the second valve function unit 14 (a service valve) and a joint body 16. In the housing 15 are formed a flow path 17 bent into a substantially L-shape (substantially right angle) and having two ends open in an outer surface of the housing 15 and a branch path 18 which communicates with the flow path 17 and is open in the outer surface of the housing 15. The closing valve A is fixed so as to be exposed in the outer surface of the outdoor unit B. One of the ends of the flow path 17 is airtightly secured to a connecting pipe 19 of a compressor (not shown) of the outdoor unit B by means such as brazing.

When a first valving element 20 of the first valve function unit 13 is manually operated, the first valve function unit 13 is switchable between an open state in which a refrigerant is allowed to flow through the flow path 17 and a closed state in which the refrigerant is disallowed to flow through the flow path 17. Further, when a second valving element 21 of the second valve function unit 14 is manually operated, air can be evacuated from the branch path 18 and an insertion space 23 and the pipe P two latter of which communicate with the branch path 18.

### Pipe joint Ja

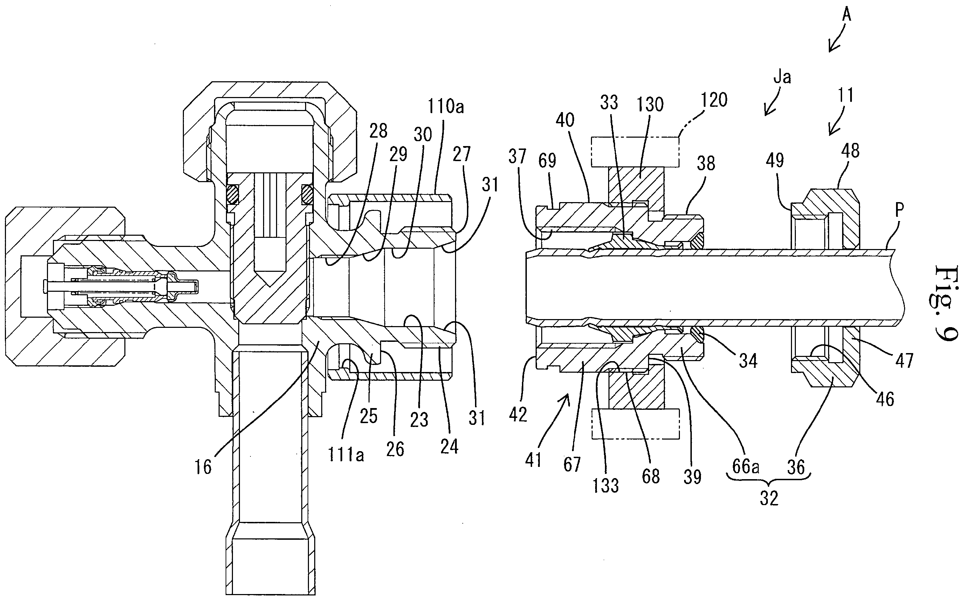

The pipe joint Ja includes the cylindrical joint body 16 and a joint function unit 12 as shown in Figs. 1 and 9. The joint function unit 12 includes a diameter-reducing unit 22 including a rear tapered surface 31 (see Fig. 9) and the cylindrical lock member 11. The pipe joint Ja has a hollow interior which communicates with an end of the flow path 17 and is open in a rear end surface (distal end surface) of the joint body 16. The interior of the pipe joint Ja serves as the insertion space 23 into which the pipe P is inserted. The joint body 16 is formed integrally with the housing 15 and protrudes from an outer surface of the housing 15 into a cylindrical shape.

In the following description, a direction parallel to an inserting/pulling-out direction of the pipe P into/from the pipe joint Ja (the insertion space 23) is referred to as "front-back direction." The inserting/pulling-out direction of the pipe P is parallel to a direction in which the clamping member 32 is moved while being rotated. Front in the inserting direction of the pipe P into the pipe joint Ja (leftward in figs 1 to 10) is referred to as "front". Back in the inserting direction of the pipe P into the pipe joint Ja is referred to as "rear". The front-back direction is used as a synonym for "axial direction" of the pipe joint Ja (the joint body 16).

A second male thread 24 is formed on the outer periphery of a rear end of the joint body 16. A concentrically circular enlarged diameter portion 25 is formed forward of the second male thread 24 on the outer periphery of the joint body 16. The enlarged diameter portion 25 has a rear end surface which serves as a detection receiving portion 26 comprised of a flat surface perpendicular to an axial direction of the joint body 16. The joint body 16 has a rear end surface which is a flat surface perpendicular to the inserting/pulling-out direction of the pipe P. The flat surface has an inner peripheral edge (that is, a peripheral edge serving as a boundary between the flat surface and a rear tapered surface 31) formed into a wedge-shaped corner edge 27, as shown in Fig. 9.

An inner peripheral surface of the joint body 16 includes a third female thread 28, a front tapered surface 29, a constant diameter surface 30 and the rear tapered surface 31 sequentially from the front end toward the rear end, as shown in Fig. 9. The front tapered surface 29 is tapered such that the diameter is gradually reduced forward. The front tapered surface 29 has a front end having an inner diameter smaller than an outer diameter of the pipe P and a rear end having an inner diameter slightly larger than the outer diameter of the pipe P. The constant diameter surface 30 has a constant inner diameter from a front end to a rear end. The rear tapered surface 31 has a diameter which is gradually reduced forward. The rear tapered surface 31 has a front end with an inner diameter equal to an inner diameter of the constant diameter surface 30 and a maximum inner diameter of the front tapered surface 29.

### Lock member 11 and clamping member 32

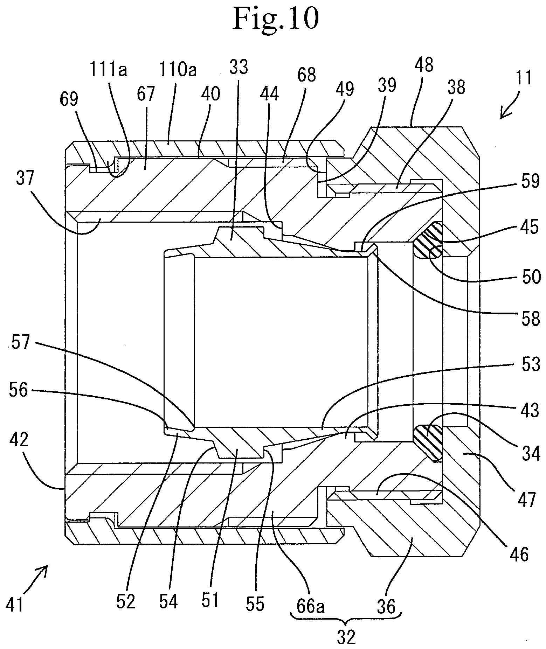

The lock member 11 includes a cylindrical clamping member 32, a cylindrical ferrule 33, a circular elastic ring 34 and cylindrical cover 110a all of which are assembled together, as shown in Fig. 10. The clamping member 32 is composed of two parts, that is, a brass fixing member 66a and a brass clamping nut 36.

### Fixing member 66a

The fixing member 66a has an inner periphery including a front end side region provided with a second female thread 37 formed into a right-hand thread. The right-hand thread is defined as a helical shape such that a member (the fixing member 66a) formed with the right-hand thread is moved forward away from the worker when screwed into a counter member (the second male thread 24 of the joint body 16) while being rotated clockwise (hereinafter referred to as "rotated rightward") as viewed from the worker. The fixing member 66a is externally fitted onto the joint body 16 coaxially from the rear, and the second female thread 37 is fitted to the second male thread 24 and screwed in while being rotated rightward as viewed from the rear, whereby the fixing member 66a is fixed to the joint body 16. Accordingly, the second male thread 24 is a right-hand thread.

The fixing member 66a has an outer peripheral rear end formed with a first male thread 38 which is also a right-hand thread in the same manner as the second female thread 37. A pressure receiving portion 39 is formed on the outer periphery of the fixing member 66a so as to be located forward of the first male thread 38. The pressure receiving portion 39 is formed into the shape of a flat surface perpendicular to the axial direction and faces the rear. The fixing member 66a includes a region that is located forward of the pressure receiving portion 39 and serves as a larger diameter portion 67 having a larger outer diameter than the first male thread 38.

The larger diameter portion 67 has an outer peripheral rear end formed with a loosening male thread 68. The loosening male thread 68 is a left-hand thread contrary to the second female thread 37. The left-hand thread is defined as a helical shape such that a counter member (the loosening female thread 133 of a loosening tool 130 which will be described later) is moved forward away from the worker when screwed into a member formed with the left-hand thread while being rotated counterclockwise (hereinafter referred to as "rotated leftward") as viewed from the worker.

The larger diameter portion 67 includes a region except for a front end thereof and loosening male thread 68. The region serves as a circumferential surface region 40. The circumferential surface region 40 has a cross section which is perpendicular to an axial direction thereof and which is a complete circle. The circumferential surface region 40 has an outer diameter equal to a maximum outer diameter of the loosening male thread 68. The circumferential surface region 40 constitutes a locking unit 41 which prevents the fixing member 66a from being displaced in a direction such that the ferrule 33 is released from a pressed state. The larger diameter portion 67 has an outer peripheral front end formed with a circumferentially positioning groove 69 which is continuous over an entire circumference.

The fixing member 66a has a front end surface (a surface opposed to the detection receiving portion 26 of the joint body 16 in the axial direction) which serves as a flat abutting portion 42 perpendicular to the axial direction. When the fixing member 66a is screwed in the clamping direction and moved axially, the abutting portion 42 comes close to the detection receiving portion 26 and abuts against the detection receiving portion 26 in face-to-face contact.

The fixing member 66a has an inner periphery including a region in the rear of the second female thread 37 as shown in Fig. 10. The region is formed with a lock portion 43 inwardly protruding concentrically over an entire periphery. The inner periphery of the fixing member 66a is formed with a flat pressing surface 44 which is located between the second female thread 37 and the lock portion 43 and faces forward. The pressing surface 44 is perpendicular to the inserting/pulling-out direction of the pipe P and is located opposite the corner edge 27 with a ring-shaped body 51 of the ferrule 33 being interposed therebetween when the fixing member 66a is assembled to the joint body 16. The fixing member 66a has an inner peripheral rear end which is formed with a cutout 45 which is formed into a tapered shape such that a diameter of the cutout 45 is reduced forward. The cutout 45 is open to the rear end surface of the fixing member 66a.

### Clamping nut 36

The clamping nut 36 formed into the shape of a ring continuous over an entire circumference. The clamping nut 36 has an inner peripheral front end formed with a first female thread 46 which is a right-hand thread. The clamping nut 36 has an inner peripheral rear end formed with a concentric smaller diameter portion 47 having a smaller inner diameter than the first female thread 46. The inner diameter of the smaller diameter portion 47 is equal to or slightly larger than an external diameter of the pipe P. The clamping nut 36 has an outer periphery formed into a regular hexagonal fitting portion 48. A general purpose tool 120 can be fitted with the fitting portion 48. The general purpose tool 120 indicates a tool which is fitted with a regular hexagonal outer periphery and can rotate a member to be fitted, such as a spanner or an adjustable wrench. Further, the clamping nut 36 has a front end surface serving as a pressing portion 49 formed into the shape of a flat surface which is perpendicular to the axial direction and faces forward.

The clamping nut 36 is assembled to the fixing member 66a from the rear while being rotated rightward (in the clamping direction) as viewed from the rear thereby to be screwed into the first male thread 38. When the clamping nut 36 and the fixing member 66a have been assembled together, a retaining groove 50 facing the inner periphery of the clamping member 32 is formed by the cutout 45 and the smaller diameter portion 47.

### Elastic ring 34

The elastic ring 34 is fitted into the retaining groove 50. The elastic ring 34 is made of rubber and formed into an annular shape continuous over an entire circumference. The elastic ring 34 in an elastically non-deformed state has an inner diameter substantially equal to the outer diameter of the pipe P. More specifically, the inner diameter of the elastic ring 34 may be equal to, larger or smaller than the outer diameter of the pipe P.

The clamping nut 36 is located at an initial position before the pipe P is connected to the pipe joint Ja, as shown in Figs. 1 to 3. When the clamping nut 36 is located at the initial position, the elastic ring 34 is not elastically deformed even when in contact with the cutout 45 or the smaller diameter portion 47, or the elastic ring 34 has a small amount of deformation even if elastically deformed. Further, when the clamping nut 36 is located at the initial position, an axial gap is defined between the pressing portion 49 of the clamping nut 36 and the pressure receiving portion 39 of the fixing member 66a, and a gap is also defined between the rear end surface of the fixing member 66a and the front surface of the smaller diameter portion 47, and a gap is also defined between the rear end surface of the fixing member 66a and the front surface of the smaller diameter portion 47.

### Ferrule 33

The ferrule 33 is made of bras and disposed coaxially with the joint body 16 and the clamping member 32 in the hollow interior of the fixing member 66a. The following will describe the form of the ferrule 33 in the case where the pipe P is not connected to the pipe joint Ja (the ferrule 33 is not in contact with the pipe P). The ferrule 33 has a cylindrical shape such that the ferrule 33 surrounds the pipe P inserted into the pipe joint Ja (the insertion space 23). The ferrule 33 has a minimum inner diameter that is larger than the outer diameter of the pipe P and substantially equal to the inner diameter of the constant diameter surface 30.

The ferrule 33 includes a thick ring-shaped body 51, a cylindrical clamping portion 52 which is thinner than the body 51 and extends forward from the body 51, and a holding portion 53 which is thinner than the body 51 and extends rearward from the body 51, as shown in Fig. 10. The body 51 has an outer periphery with a diameter enlarged from outer peripheries of the cylindrical clamping portion 52 and the holding portion 53 so that outer periphery of the body 51 is stepped. The body 51 has a front surface formed into a seal surface 54 which has an angle approximate to a right angle relative to the axial direction and has a diameter reduced forward. The body 51 has a rear surface formed into a pressure receiving surface 55 which is perpendicular to the axial direction.

The cylindrical clamping portion 52 has an outer peripheral surface inclined so that a diameter thereof is reduced forward. The cylindrical clamping portion 52 has an inner peripheral edge serving as a first biting portion 56. A wedge-shaped second biting portion 57 pointed diagonally forwardly inward is formed on the inner periphery of the cylindrical clamping portion 52 so as to be located to the rearward of the first biting portion 56. The holding portion 53 has a rear end serving as outwardly directed protrusion 58 which extends in a cantilevered shape such that a diameter thereof is enlarged radially outward to the diagonally rearward. The holding portion 53 has an outer surface including a region located forward of the protrusion 58. The region serves as a recess 59 with a smallest outer diameter of the holding portion 53.

The ferrule 33 is housed into the fixing member 66a from the front before the protrusion 58 is bent radially outward. In this state, when the rear end of the holding portion 53 is bent using a jig (not shown), the protrusion 58 and the recess 59 are formed, and the lock portion 43 is engaged with the recess 59 thereby to be locked. The ferrule 33 and the fixing member 66a are assembled together so as to be prevented from disengagement in the front-back direction. The clamping nut 33 is detached from the fixing member 66a when the protrusion 58 is formed.

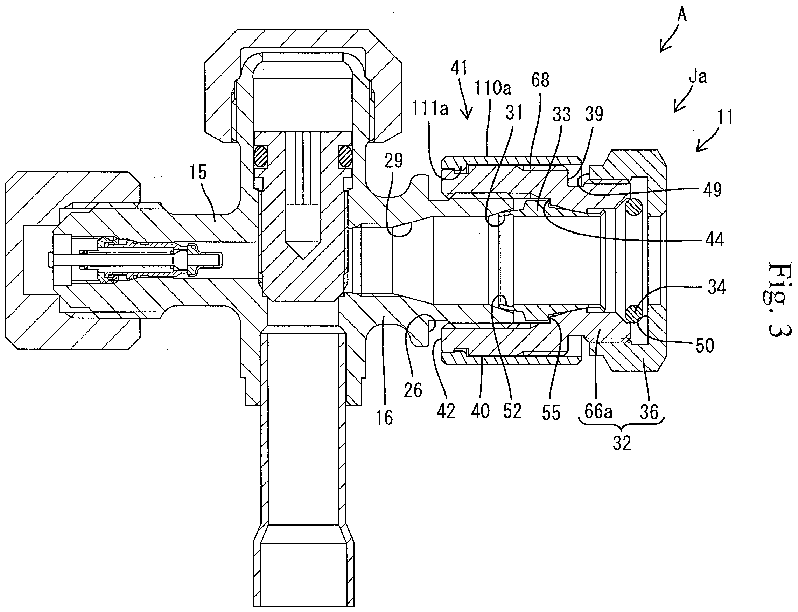

The lock member 11 assembled to the joint body 16 from the rear by threadingly engaging the second female thread 37 with the second male thread 24, as shown in Fig. 1. The second male thread 24 and the second female thread 37 have a larger thread pitch than the first male thread 38 and the first female thread 46. Before the pipe P is connected to the pipe joint Ja, as shown in Fig. 3, the ferrule 33 is not deformed, a gap is defined between the detection receiving portion 26 and the abutting portion 42, a gap is defined between the pressure receiving portion 39 and the pressing portion 49 and a gap is defined between the pressing surface 44 and the pressure receiving surface 55.

### Cover 110a

The cover 110a is made of a synthetic resin and formed into a cylindrical shape as a whole. The cover 110a has a function as a locking unit 41 and a function of protecting the loosening male thread 68. The cover 110a has a front-back dimension that is slightly larger than an overall length of the larger diameter portion 67, as shown in Fig. 10. The cover 110a has an inner diameter that is equal to or slightly larger than that of the larger diameter portion 67 (the maximum outer diameter of the loosening male thread 68 and the circumferential surface region 40). The cover 110a has an inner peripheral front end formed with a circular positioning rib 111a protruding radially inward over a whole circumference.

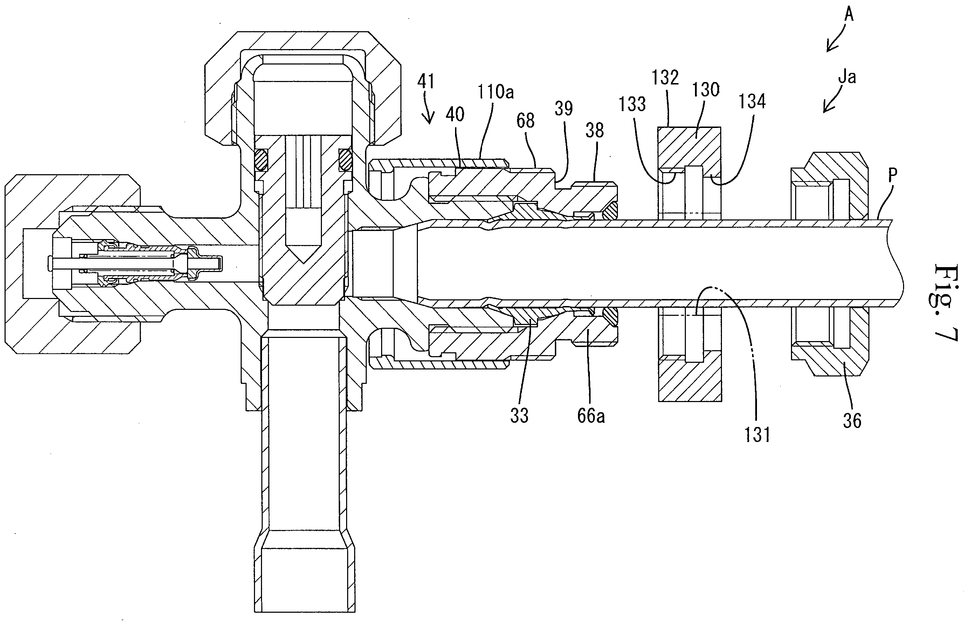

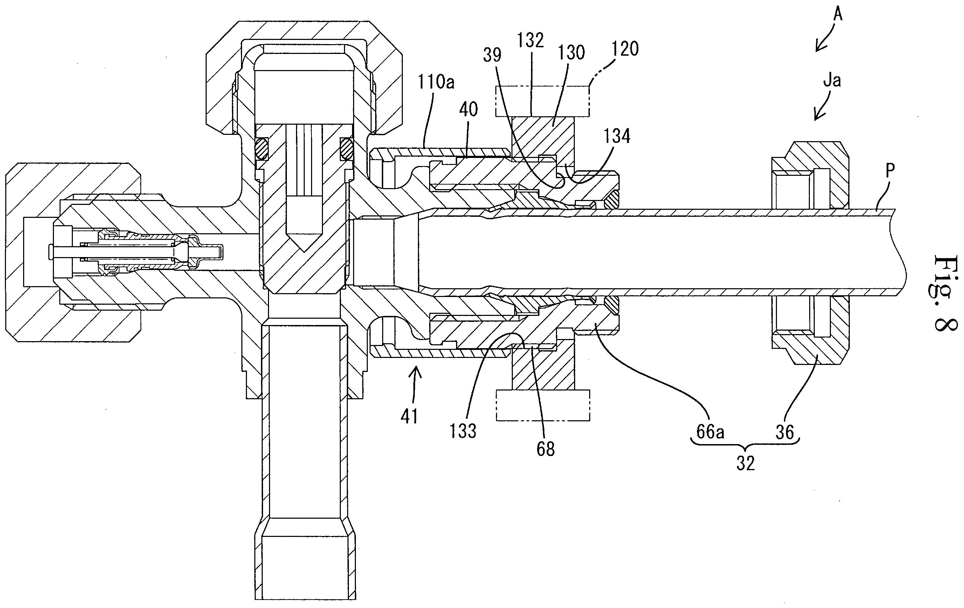

The cover 110a is normally engaged with the positioning groove 69 by the positioning rib 111a thereby to be locked, whereby the cover 110a is held at a protecting position (see Figs. 1 to 6 and 10) where the cover 110a covers a whole region of the loosening male thread 68. The cover 110a located at the protecting position is capable of rotating idly around the fixing member 66a while surrounding the fixing member 66a. Further, since the cover 110a is made of the synthetic resin, the cover 110a is elastically deformable radially. Accordingly, the cover 110a held at the protecting position can be moved from the protecting position to a forward exposed position (see Figs. 7 and 8) when an operating force exceeding the locking force of the positioning rib 111a and the positioning groove 69. When the cover 110a is located at the exposed position, at least the whole loosening male thread 68 of the outer periphery of the larger diameter portion 67 is exposed.

### Loosening tool 130

The loosening tool 130 is dedicated to detaching the pipe P from the pipe joint Ja by releasing the pipe P and the pipe joint Ja from the airtightly sealed state by the ferrule 33 under the condition that the pipe P is connected to the pipe joint Ja by the clamping operation of the clamping nut 36. The loosening tool 130 may be manufactured and distributed as an accessory part or a component part of the pipe joint Ja (the closing valve A) or may be a part sold separately from the pipe joint Ja (the closing valve A).

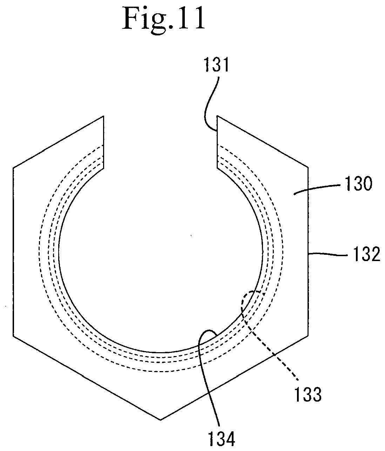

The loosening tool 130 is made of a metal material and formed into a general C-shape as a whole as shown in Fig. 11. The loosening tool 130 has a communication part 131 which is formed by cutting out a part thereof from an inner periphery to an outer periphery so that the communication part 131 communicates between the inner and outer peripheries. The communication part 131 has a circumferential opening which is larger than the outer diameter of the pipe P. The loosening tool 130 has an outer periphery formed with a regular hexagonal loosening fitting part 132. The dedicated tool 120 is fittable with the fitting part 132 as the tool used to turn the clamping nut 36.

The loosening tool 130 has an inner periphery including a front end region formed with a loosening female thread 133. The loosening female thread 133 is a left-hand thread as the loosening male thread 68. Further, the inner periphery of the loosening tool 130 has a rear end formed with a prevention abutting part 134 protruding radially inward into the shape of a rib over a whole circumference. The prevention abutting part 134 has an inner diameter set to be larger than a maximum outer diameter of the first male thread 38 and smaller than the outer diameter of the larger diameter portion 67.

### Disengagement preventing member 60

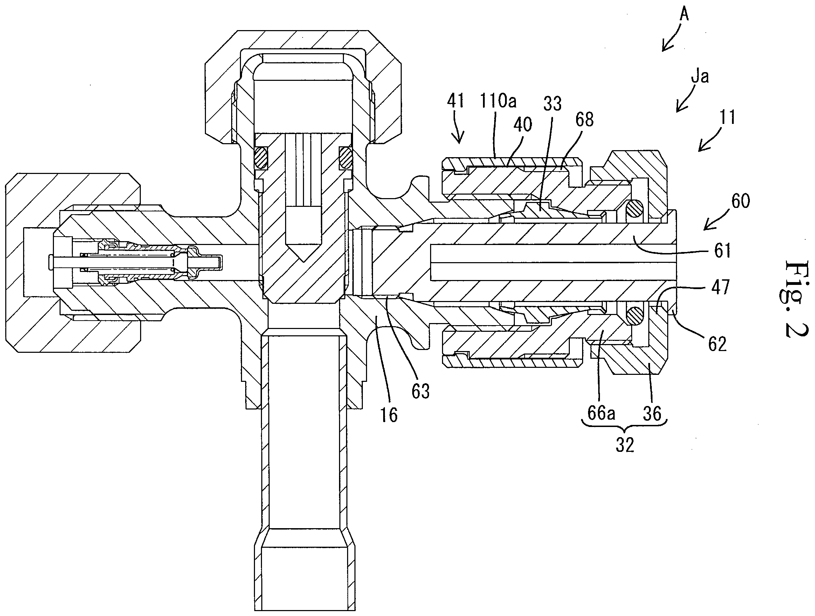

The closing valve A is provided with a disengagement preventing member 60 to prevent the clamping member 32 from loosening to disengage from the joint body 16 before the pipe P is connected to the pipe joint Ja as shown in Figs. 1 and 2. The disengagement preventing member 60 also functions as a sealing member preventing flow of refrigerant in the pipe joint Ja (the insertion space 23). The disengagement preventing member 60 is attachable to and detachable from the pipe joint Ja.

The disengagement preventing member 60 is made of brass and includes a cylindrical body 61, a stopper 62 and a third male thread 63 all of which are formed integrally therewith. The cylindrical body 61 has a regular hexagonal fitting hole 64 which is formed therein and is open in a rear end surface thereof. The cylindrical body 61 has an outer diameter that is smaller than a minimum inner diameter of the ferrule 33 in its undeformed state. The stopper 62 is located on an outer periphery of the rear end of the cylindrical body 61 and formed into the shape of a circular flange concentric with the cylindrical body 61. The stopper 62 has an outer diameter that is larger than an outer diameter of the cylindrical body 61 and an inner diameter of the smaller diameter portion 47 of the clamping nut 36.

The third male thread 63 is formed on an outer periphery of the front end of the cylindrical body 61. The third male and female threads 63 and 28 are right-hand threads as the first male and female threads 38 and 4 6 and the second male and female threads 24 and 37. The third male and female threads 63 and 28 have a smaller thread pitch than the first male and female threads 38 and 46. The cylindrical body 61 has an outer periphery including a region which is adjacent to the rear of the third male thread 63 and serves as a stepped sealing abutting portion 65 continuous over an entire circumference thereof. The sealing abutting portion 65 has an outer diameter that is larger than a minimum inner diameter of the front end of the front tapered surface 29 and the outer diameter of the third male thread 63.

### Assembly of the pipe joint Ja

The pipe joint Ja will be assembled in the following procedure. The second female thread 37 is threadingly engaged with the second male thread 24 so that the lock member 11 is assembled to the joint body 16 from the rear. In this case, the fixing member 66a is held with fingers to be threadingly engaged clockwise (in the clamping direction) only by hand force without using the general purpose tool 120. Further, the clamping nut 36 is located at an initial position. When the rotation of the fixing member 66a is stopped, the assembly of the lock member 11 is completed with the lock member 11 is in a temporarily assembled state.

In the temporarily assembled state, the ferrule 33 is not almost deformed although the front end of the ferrule 33 (the cylindrical clamping portion 52) slightly abuts on the rear tapered surface 31 of the joint body 16, as shown in Fig. 3. Further, the abutting portion 42 of the front end of the lock member 11 departs rearward to be located opposite the detection receiving portion 26 of the joint body 16.

Subsequently, the disengagement preventing member 60 is assembled into the pipe joint Ja (the insertion space 23) from the rear as shown in Fig. 1. In the assembly, the cylindrical body 61 is inserted into the insertion space 23, and the stopper 62 is held with fingers and the third male thread 63 is threadingly engaged with the third female thread 28 only by hand force without using the general purpose tool 120.

After the sealing abutting portion 65 has abutted on the front tapered surface 29, the general-purpose tool (not shown) is fitted into the fitting hole 64 so that the disengagement preventing member 60 is further screwed. As the result of the screwing with the general purpose tool, the sealing abutting portion 65 adheres to the front tapered surface 29 so as to airtightly bite into the front tapered surface 29 over a whole circumference. This airtightly seals a gap between the inner periphery of the joint body 16 and the outer periphery of the disengagement preventing member 60, thereby preventing the refrigerant in the flow path 17 from leaking outside through the insertion space 23. The assembly of the pipe joint Ja is thus completed.

The closing valve A to which the pipe joint Ja has thus assembled is attached to the outdoor unit B of the heat exchanger. Further, the outdoor unit B is filled with a refrigerant. However, since the flow path 17 is closed by the first valving element 20, there is no possibility that the refrigerant in the outdoor unit B would leak to the pipe joint Ja side. Even if the refrigerant flows through the first valving element 20 to the pipe joint Ja side, the refrigerant does not leak through the pipe joint Ja to the atmosphere since the interior of the pipe joint Ja airtightly sealed by the sealing action of the disengagement preventing member 60.

Even if the worker rotates by mistake the lock member 11 in the loosening direction (the direction in which the lock member 11 is disengaged from the joint body 16) under the condition that the disengagement preventing member 60 is assembled to the pipe joint Ja, the rear end of the clamping nut 36 (the rear surface of the smaller diameter portion 47) abuts against the stopper 62 of the disengagement preventing member 60 before the fixing member 66a detaches from the joint body 16, as shown in Fig. 2. Since this prevents further rearward movement of the clamping nut 36, the clamping unit 36 (the clamping member 32) is prevented from disengaging from the joint body 16.

Further, there is a possibility that the disengagement preventing member 60 would rotate in the loosening direction by the friction between the clamping nut 36 and the stopper 62, when the clamping nut 36 is subjected to a strong force thereby to be rotated in the loosening direction under the condition that the lock member 11 abuts against the stopper 62 thereby to be prevented from disengagement. However, since the thread pitch of the first male and female threads 38 and 46 is larger than that of the third male and female threads 63 and 28, the disengagement preventing member 60 is locked so as to be unrotatable without co-rotation. This reliably prevents disengagement of the lock member 11 and the loosening of the disengagement preventing member 60.

### Connection of pipe P

The disengagement preventing member 60 is disengaged from the joint body 16 in advance in case that the pipe P is to be connected to the pipe joint Ja, as shown in Fig. 3. The worker grips the housing 15 with one hand and the pipe P with the other hand and inserts the pipe P into the insertion space 23. The front end of the pipe P is abutted against the front tapered surface 29 so that the pipe P is stopped in front. Subsequently, the hand is once removed from the housing 15 and then put to the clamping nut 36 so that the clamping nut 36 is rotated rightward to be threadingly engaged in the clamping direction (forward).

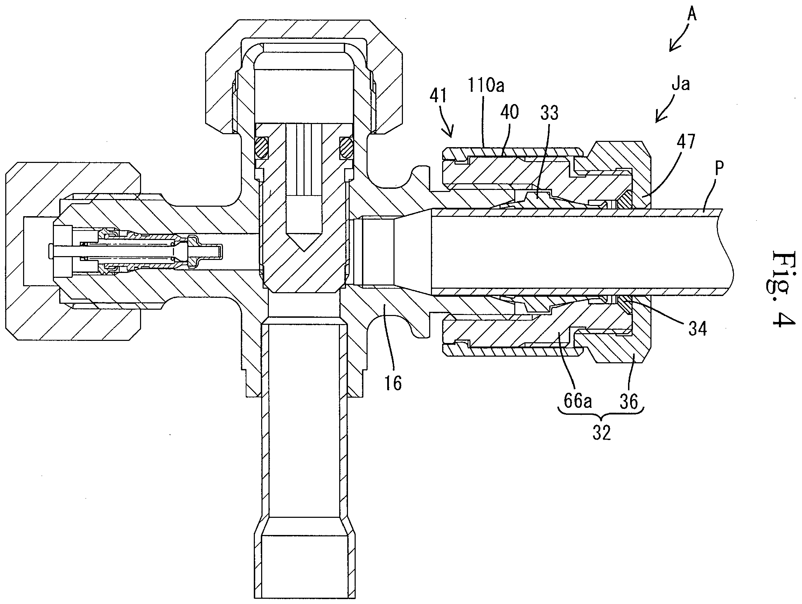

When the clamping nut 36 is threadingly engaged, the front-back dimension of the retaining groove 50 is reduced, and the elastic ring 34 is crushed back and forth between the cutout 45 and the smaller diameter portion 47 with the result that the inner diameter of the elastic ring 34 is reduced. As a result, the elastic ring 34 elastically abuts against the whole outer periphery of the pipe P. Frictional resistance due to the elastic abutment prevents the pipe P from movement relative to the lock member 11 in the front-back direction with the result that the pipe P is held while being prevented from disengagement from the joint body 16 as shown in Fig. 4.

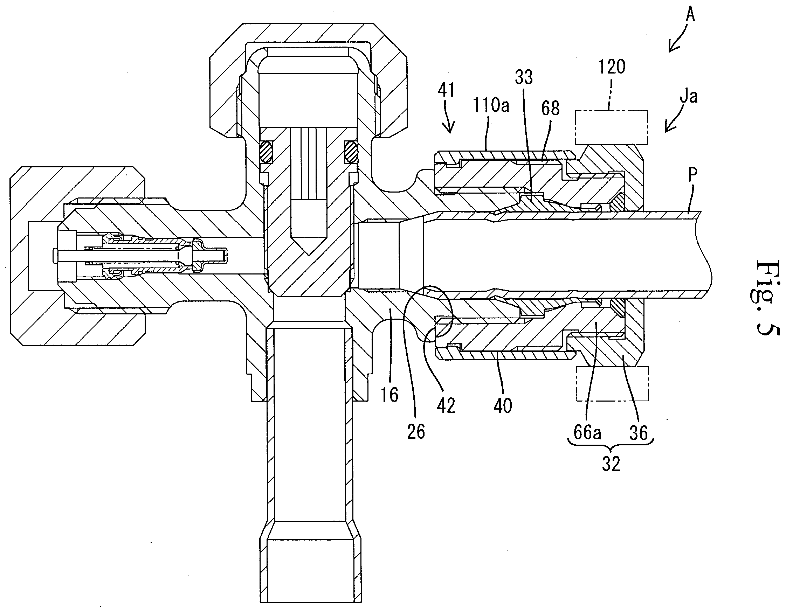

After the pipe P has been held, the general-purpose tools 120 are fitted with the fitting portion 48 of the clamping nut 36 and the outer surface of the housing 15 respectively, so that the clamping nut 36 is rotated rightward so as to be moved forward (in the clamping direction). In this case, since the smaller diameter portion 47 of the clamping nut 36 abuts against the rear end surface of the fixing member 66a, the fixing member 66a is rotated together with the clamping nut 36 even when a rotational force is directly imparted to the fixing member 66a. Thus, the clamping member 32 is screwed in the clamping direction. The screwing is continued till the abutting portion 42 butts the detection receiving portion 26 with the result that the clamping member 32 is prevented from threading engagement, as shown in Fig. 5.

In the process of threading engagement of the clamping member 32, the pressing surface 44 of the fixing member 66a abuts against the pressure receiving surface 55 of the ferrule 33 and thereafter, the pressing surface 44 axially presses the pressure receiving surface 55, with the result that the ferrule 33 is moved forward relative to the joint body 16. With this, the cylindrical clamping portion 52 is plastically deformed so that the diameter thereof is reduced by the inclination, while brought into sliding contact with the rear tapered surface 31.

When cylindrical clamping portion 52 is deformed so that the diameter thereof is reduced, the first and second biting portions 56 and 57 bite into the outer periphery of the pipe P over the whole periphery like wedges, preventing axial relative displacement of the pipe P. As the result of the biting action, a gap between the inner periphery of the ferrule 33 and the outer periphery of the pipe P is airtightly sealed at two axially (in the lengthwise direction of the pipe P) spaced front and rear locations, and the pipe P is locked so as to be prevented from dropping off rearward.

Further, the front end of the outer periphery of the cylindrical clamping portion 52 airtightly adheres to the rear tapered surface 31 over a whole periphery while being plastically deformed, and the corner edge 27 of the joint body 16 airtightly adheres to the seal surface 54 of the ferrule 33 over the whole periphery while being plastically deformed (crushing deformation). As the result of the adhering action, a gap between the outer periphery of the ferrule 33 and the inner periphery of the joint body 16 is airtightly sealed at two axially (in the lengthwise direction of the pipe P) spaced front and rear locations.

The aforementioned airtight biting and adherence indicate a normal sealed state (normal clamped state) in which the diameter-reducing unit 22 correctly connects the pipe joint Ja and he pipe P. In the normal sealed state, abutting portions are plastically deformed in the bitten and adhered portions. Accordingly, refrigerant leakage is reliably prevented between the pipe P and the pipe joint Ja.

Further, in the process of screwing the clamping member 32 in the clamping direction, the diameter-reducing unit 22 gets into the normal sealed state immediately before the abutting portion 42 reaches the detection receiving portion 26. At the time when the diameter-reducing unit 22 transitions from an incomplete sealed state (the state where the cylindrical clamping portion 52 has not airtightly bitten into the pipe P) to the normal sealed state, the worker cannot confirm by sight a normal clamped state in appearance. However, an operating manual determines that the clamping of the clamping member 32 (the clamping nut 36) should be continued with visual confirmation till the abutting portion 42 abuts against the detection receiving portion 26. Accordingly, when even a non-expert carries out the clamping work of the clamping member 32 according to the operating manual, the pipe P can be connected so that the normal sealed state is reached.

### Working and advantageous effect of embodiment 1

As described above, the pipe joint Ja (the closing valve A) of embodiment 1 includes the cylindrical fixing member 66a screwed into the joint body 16, the ferrule 33 which, when the fixing member 66a is rotated in the clamping direction to be screwed, receives the axial pressing force from the fixing member 66a thereby to airtightly seal the gap between the inner periphery of the joint body 16 and the outer periphery of the pipe P, and the clamping nut 36 rotated when the general-purpose tool 120 is fitted with the fitting portion 48 which is formed on the outer periphery thereof, thereby being capable of imparting a rotative force in the clamping direction to the fixing member. Accordingly, when the general-purpose tool 120 is fitted with the fitting portion 48 to rotate the clamping nut 36 so that the rotative force in the clamping direction is imparted to the fixing member 66a from the clamping nut 36, the ferrule 33 is pressed by the fixing member 66a with the result that the gap between the inner periphery of the joint body 16 and the outer periphery of the pipe P is airtightly sealed, and the flow path 17 and the pipe P are connected together.

When a loosening rotative force is imparted by mistake to the clamping nut 36 after the pipe P has been connected to the pipe joint Ja, although the clamping nut 36 is allowed to be rotated in the loosening direction, the fixing member 66a is not allowed to be rotated in the loosening direction since there is provided the locking unit 41 which employs the biting of metals. The biting structure of the metals functioning as the locking unit 41 includes a biting structure between the corner edge 27 of the joint body 16 and the seal surface 54 of the ferrule 33, a biting structure between the pressure receiving surface 55 of the ferrule 33 and pressing surface 44 of the fixing member 66a, a biting structure between the front tapered surface 29 of the joint body 16 and the front end of the pipe P and a biting structure between the outer periphery of the pipe P and the first and second biting portions 56 and 57 of the ferrule 33. Accordingly, even when the rotative force imparted to the clamping nut 36 is transmitted to the fixing member 66a, the abovementioned biting structures can reliably prevent the loosening of the fixing member 66a.

Moreover, since the outer periphery of the fixing member 66a is surrounded by the cover 110a capable of rotating idly, the cover 110a rotates idly even when the general-purpose tool 120 is fitted with the outer periphery of the cover 110a to impart the loosening rotative force to the cover 110a, and the rotative force of the general-purpose tool 120 is not transmitted to the fixing member 66a. The outer periphery of the fixing member 66a becomes exposed in case that the cover 110a is broken by the general-purpose tool 120 thereby to be removed from the fixing member 66a or the cover 110a is moved rearward to a large extent. However, the outer periphery of the fixing member 66a includes the completely circular circumferential surface region 40, the completely circular loosening male thread 68 and the completely circular first male thread 38. Accordingly, even when the general-purpose tool 120 is directly fitted with the outer periphery of the fixing member 66a so that the loosening rotative force is intended to be imparted to the fixing member 66a, the general-purpose tool 120 is slid. The fixing member 66a cannot be rotated by this slipping action of the completely circular shape, and in addition, by the locking unit 41 by the biting of the metals.

The pipe joint Ja (the closing valve A) of embodiment 1 includes the locking unit 41 which prevents rotation of the fixing member 66a in the loosening direction and retains the airtightly sealed state by the ferrule 33 when the rotative force is imparted to the fixing member 66a using the general-purpose tool 120. Accordingly, even when the rotative force is imparted to the fixing member 66a with the general-purpose tool 120 with the pipe P being connected to the pipe joint Ja, the locking unit 41 prevents the fixing member 66a from rotation in the loosening direction such that the ferrule 33 is released from the pressure against the ferrule 33. According to embodiment 1, the pipe joint Ja is superior in terms of the airtight sealing performance of the ferrule 33.

### Lock member 11 and disengagement of pipe P

The pipe joint Ja (the closing valve A) of embodiment 1 includes, as means for detaching the lock member 11 and the pipe P from the pipe joint Ja (the joint body 16) thereby to release the pipe joint Ja from the airtightly sealed state by the ferrule 33, the loosening male thread 68 threaded in the direction opposed to the screw-in direction of the joint body 16 and the fixing member 66a and formed on the outer periphery of the fixing member 66a, the loosening tool 130 threadingly engageable with the loosening male thread 68 and the pressure receiving portion 39 which receives the loosening tool 130 and prevents further screw-in of the loosening tool 130 when the loosening tool 130 is screwed in the loosening male thread 68 and rotated in the direction opposed to the clamping direction of the fixing member 66a.

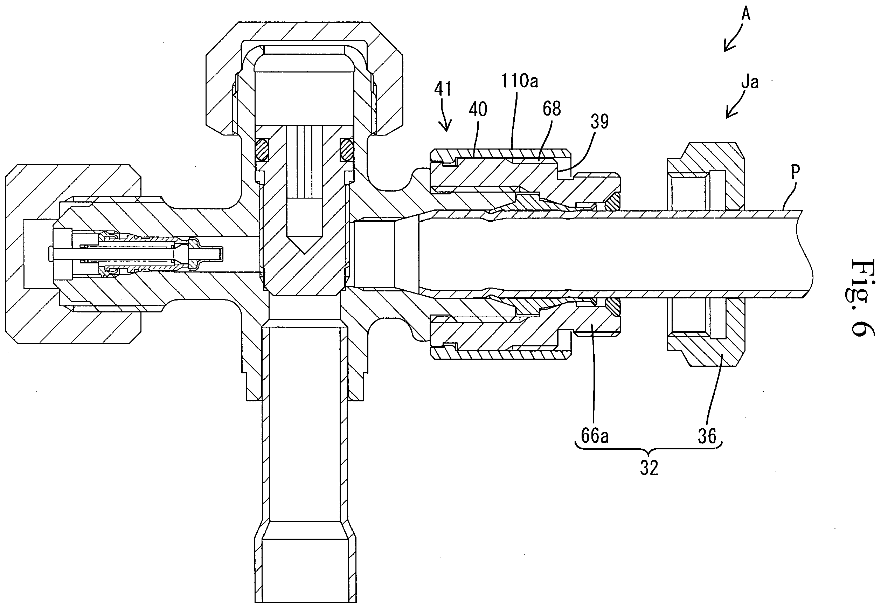

In the disengaging work, the clamping nut 36 is loosened with the general-purpose tool 120 thereby to be detached from the fixing member 66a and slid rearward, as shown in Fig. 6. The rotative force of the general-purpose tool 120 and the clamping nut 36 is imparted to the fixing member 66a when the clamping nut 36 is loosened. However, the fixing member 66a is kept fixed to the joint body 16 but is not loosened by the locking unit 41. After the clamping nut 36 has been disengaged from the fixing member 66a, the cover 110a is slid to the exposing position so that the loosening male thread 68 is exposed and the loosening tool 130 is caused to coaxially stand by in the rear of the fixing member 66a, as shown in Fig. 7. In this case, since the loosening tool 130 is formed with the communication part 131, the loosening tool 130 is caused to come close to the pipe P from the vertical or horizontal direction, so that the pipe P is passed through the communication part 131. Accordingly, the pipe P need not be cut.

Subsequently, the loosening tool 130 is threadingly engaged with the loosening male thread 68 thereby to be moved forward while being rotated leftward (in the direction opposed to the rotational direction in clamping the fixing member 66a), so that the prevention abutting part 134 is abutted against the pressure receiving portion 39 (see Fig. 8). The rotation work of the loosening tool 130 may be carried out by gripping the loosening tool 130 directly with hand or the general-purpose tool 120 may be fitted with the loosening fitting portion 132. When abutted against the pressure receiving portion 39, the loosening tool 130 is prevented from a further screwing operation, that is, rotation and axial (forward) movement relative to the fixing member 66a.

The general-purpose tool 120 is fitted with the loosening fitting portion 132 in this state so that the leftward rotative force exceeding the rotation preventing force of the locking unit 41 is imparted to the loosening tool 130. The loosening tool 130 is then further rotated leftward (the direction in which the prevention abutting part 134 is pressed against the pressure receiving portion 39), and the fixing member 66a is rotated leftward (the loosening direction opposed to the clamping direction) together with the loosening tool 130. When the fixing member 66a is rotated in the loosening direction, the ferrule 33 is released from the pressure of the fixing member 66a, with the result that the pipe joint Ja and the pipe P are released from the airtightly sealed state. When the fixing member 66a is further rotated in the loosening direction by the loosening tool 130, the fixing member 66a, the ferrule 33, the loosening tool 130 and the pipe P are disengaged together from the joint body 16 as shown in Fig. 9. The cover 110a remains at the joint body 16 side.

According to the pipe joint Ja of embodiment 1, the airtightness by the ferrule 33 is not lost even when only the general-purpose tool 120 is used. When both the loosening tool 130 and the general-purpose tool 120 are concurrently used where necessary, the pipe joint Ja and the pipe P can be released from the airtightly sealed state by the ferrule 33.

Further, the loosening tool 130 in the pipe joint Ja of embodiment 1 is wholly comprised of a generally C-shaped single part. The loosening tool 130 has the inner periphery formed with the loosening female thread 133 threadingly engageable with the loosening male thread 68. Further, the loosening tool 130 has the communication part 131 which is formed by cutting out a circumferential part thereof so as to communicate between the outer periphery and the inner periphery. The cutout size is set to be larger than the outer diameter of the pipe P. According to this construction, when the loosening tool 130 is screwed into the loosening male thread 68, the pipe P is passed through the communication part 131 without being cut, so that the loosening tool 130 can be disposed coaxially with the loosening male thread 68.

Further, the cover 110a is attached to the outer periphery of the fixing member 66a so as to be movable between the protecting position where the cover 110a covers the loosening male thread 68 and the exposing position where the cover 110a exposes the loosening male thread 68. Accordingly, the loosening male thread 68 can be protected by the cover 110a when the loosening tool 130 is not screwed into the loosening male thread 68.,

The pipe joint Ja (the closing valve A) includes the elastic ring 34 as the holding unit which is abutted against the pipe P inserted into the insertion space 23 thereby to be capable of holding the pipe P so that the pipe P is prevented from dropout. According to this construction, the pipe P inserted into the insertion space 23 can be held so as to be prevented from dropout. Accordingly, there is no possibility of the pipe P would drop out during a time period from insertion of the pipe P to start of the work to clamp the clamping member 32, with the result that the pipe joint Ja is superior in terms of the workability. Further, the elastic ring 34 is disposed at the position facing the insertion space 23 but not exposed to the outer surface of the pipe joint. Accordingly, the elastic ring 34 is protected from interference of foreign matter.

Further, the clamping member 32 includes the cylindrical fixing member 66a which is abutted against the ferrule 33 to impart the pressing force to the ferrule 33, and the clamping nut 36 which is screwed into the fixing member 66a to receive a screw-in force in the clamping direction, thereby imparting to the fixing member 66a the pressing force to the ferrule 33 side. The elastic ring 34 is disposed to be axially held between the fixing member 66a and the clamping nut 36. When screwed in the clamping direction, the elastic ring 34 is deformed so that the diameter thereof is reduced, thereby closely adhering to the outer periphery of the pipe P. Accordingly, when the elastic ring 34 is prevented from reduction in the diameter thereof before insertion of the pipe P, the frictional resistance is reduced in the insertion of the pipe with the result that the workability is improved. When the clamping nut 36 is screwed in the clamping direction after insertion of the pipe P, the pipe P can be held by the elastic ring 34 so as to be prevented from dropout.

The front tapered surface 29 is formed on the inner periphery of the joint body 16 in such a manner that the diameter thereof is reduced forward in the insertion direction of the pipe P. The distal end of the pipe P normally inserted into the insertion space 23 is abutted against the front tapered surface 29. The elastic ring 34 is disposed in the rear of the front tapered surface 29 in the insertion direction of the pipe P. According to this construction, the distal end of the pipe P inserted into the insertion space 23 is abutted against the front tapered surface 29, and the pipe P is held by the elastic ring 34 so as to be prevented from dropout. Since the position where the distal end of the pipe P is abutted against the front tapered surface 29 and the holding position of the elastic ring 34 are spaced in the insertion direction of the pipe P, the pipe P is maintained in a stable position without inclination relative to the axis line.

The closing valve A of embodiment 1 includes the disengagement preventing member 60 to prevent the clamping member 32 from disengaging from the joint body 16 when the clamping member 32 does not impart the pressing force to the ferrule 33. Accordingly, the clamping member 32 is prevented from disengagement from the joint body 16 even when the clamping member 32 is subjected to a loosening external force. Further, the cylindrical body 61 of the disengagement preventing member 60 is housed in the insertion space 23 into which the pipe P is inserted. Accordingly, foreign matter is prevented from invading the insertion space 23 with the result that the ferrule 33 is prevented from being damaged by the foreign matter. Further, since the disengagement preventing member 60 functions as the sealing member preventing the refrigerant in the flow path 17 from leaking to the outside through the insertion space 23, the number of parts is rendered smaller in this case as compared with the case where a sealing member is provided independent of the disengagement preventing member 60.

### Embodiment 2

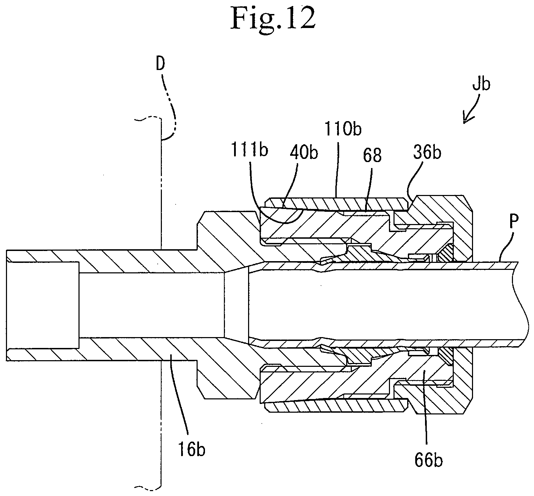

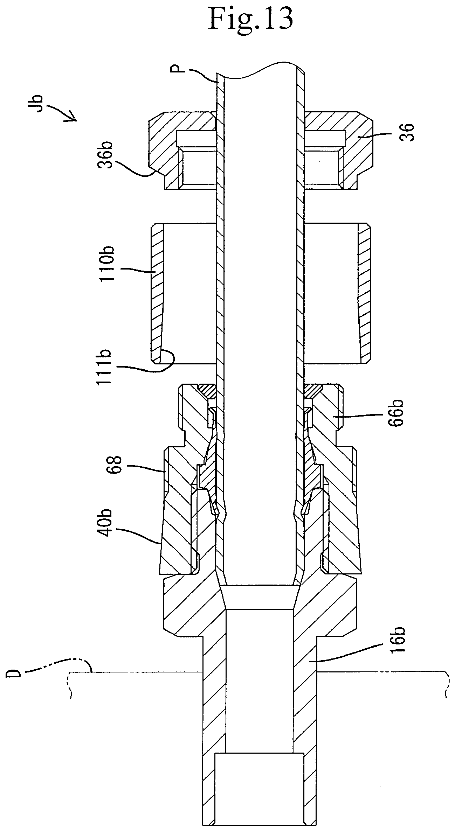

Figs. 12 and 13 show a pipe joint Jb of embodiment 2 in accordance with the invention. The pipe joint Jb of embodiment 2 is a single-function type joint unit mounted on the indoor unit D and is connected via the pipe P to the pipe joint Ja of the closing valve A of embodiment 1. A joint body 16b constituting the pipe joint Jb is connected to a refrigerant flow path of the indoor unit D. The fixing member 66b constituting the pipe joint Jb and the cover 110b differ from those in embodiment 1 respectively. The fixing member 66b in embodiment 2 serves to prevent the cover 110b from forward displacement relative to the fixing member 66b. For this purpose, the fixing member 66b is formed into a tapered shape such that an outer diameter of the circumferential surface region 40b is gradually increased.

The cover 110b has a front end inner periphery formed with a tapered positioning surface 111b capable of face-to-face contact with the tapered circumferential surface region 40b. Further, a stepped receiving portion 36b formed on the outer periphery of the clamping nut 36 serves as a unit which prevents the cover 110b from rearward displacement relative to the fixing member 66b. The stepped receiving portion 36b is in abutment with or in proximity to the cover 110b from behind thereby to be opposed to the cover 110b. When the clamping nut 36 is disengaged from the fixing member 66b in order that the pipe P may be disconnected from the pipe joint Jb, the cover 110b is displaced rearward relative to the fixing member 66b with the result that the loosening male thread 68 is exposed. The other construction, working and effect are identical with those in embodiment 1, and the description of the other construction, working and effect will be eliminated.

### Embodiment 3

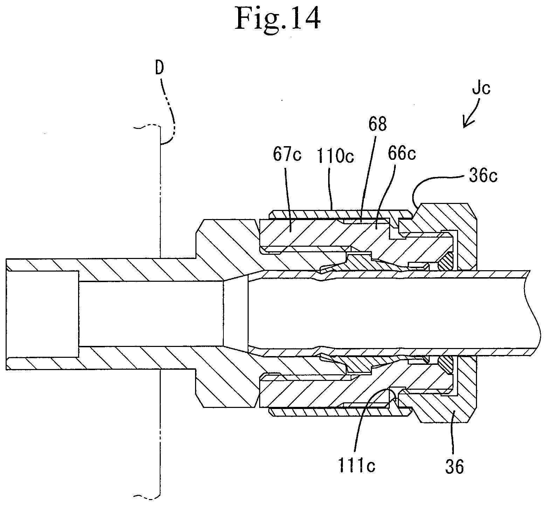

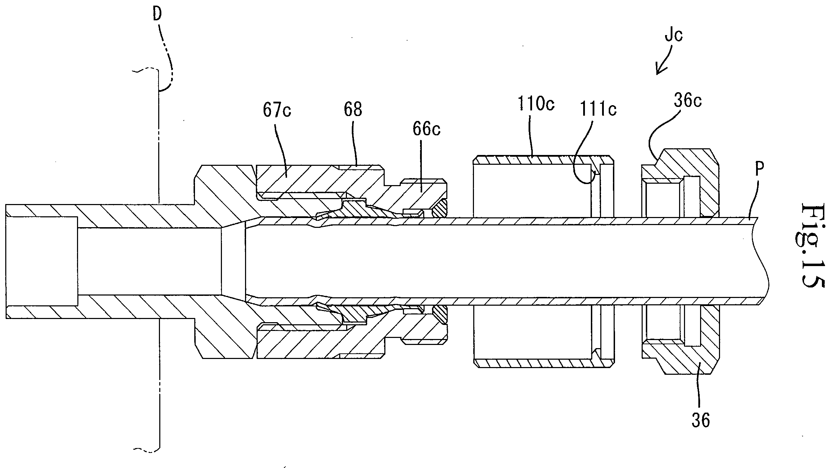

Figs. 14 and 15 show a pipe joint Jc of embodiment 3. The pipe joint Jc of embodiment 3 is also mounted on the indoor unit D as in embodiment 2. The fixing member 66c and the cover 110c both constituting the pipe joint Jc differ from those in embodiment 1. In embodiment 3, as a unit which positions the cover 110c in the front-back direction, there is provided the construction that a circumferential positioning rib 111c is held between a rear end surface of the larger diameter portion 67c of the fixing member 66c and the stepped receiving portion 36c of the clamping nut 36. When the clamping nut 36 is disengaged from the fixing member 66c, the cover 111c is rearwardly displaced relative to the fixing member 66c with the result that the loosening male thread 68 is exposed. The other construction, working and effect are identical with those in embodiment 1, and the description of the other construction, working and effect will be eliminated.

### Embodiment 4

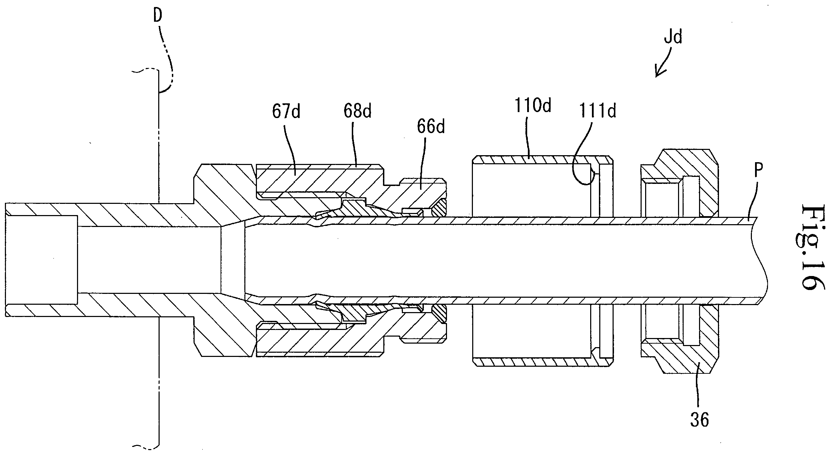

Fig. 16 shows a pipe joint Jd of embodiment 4. The pipe joint Jd of embodiment 4 is also mounted on the indoor unit D as embodiments 2 and 3. The fixing member 66d of the pipe joint Jd of embodiment 4 includes the loosening male thread 68d formed over a whole length of the outer periphery of the larger diameter portion 67d. The cover 110d in embodiment 4 is identical with the cover 110c in embodiment 3 and has a positioning rib 111d. The other construction, working and effect are identical with those in embodiment 1, and the description of the other construction, working and effect will be eliminated.

### Embodiment 5

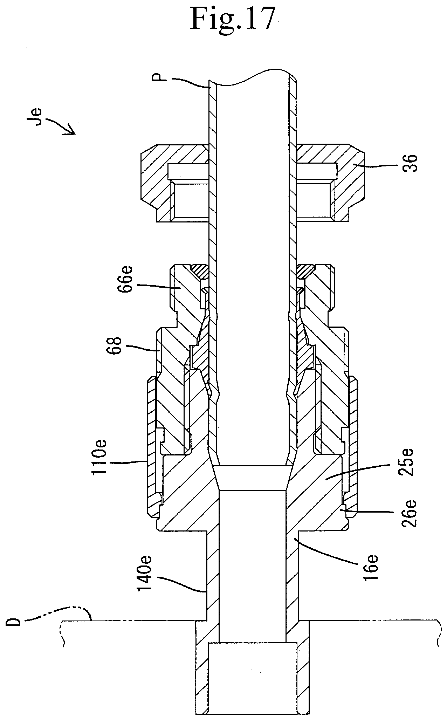

Fig. 17 shows a pipe joint Je of embodiment 5. The pipe joint Je of embodiment 5 is also mounted on the indoor unit D as embodiments 2 to 4. The fixing member 66e and the cover 110e of the pipe joint Je of embodiment 5 are identical with those in embodiment 1, but the joint body 16e differs from the joint body 16 in embodiment 1. A front stop portion 26e circumferentially protruding into a rib shape is formed on the outer peripheral front end of the enlarged diameter portion 25e of the joint body 16e, that is, at a position forward of the loosening male thread 68.

A region of the outer periphery of the joint body 16e forward of the front stop portion 26e (the enlarged diameter portion 25e) serves as a jig fitting portion 140e narrower than the enlarged diameter portion 25e. The jig fitting portion 140e has an outer periphery having known two parallel surfaces (not shown) to which a general-purpose tool (not shown) is fitted. When the clamping nut 36 is disengaged from the fixing member 66e, the cover 110e is displaced forward relative to the fixing member 66e so as to cover the enlarged diameter portion 25e. When the cover 110e is moved forward until abutting against the front stop portion 26e, the loosening male thread 68 covered by the cover 110e is exposed. The other construction, working and effect are identical with those in embodiment 1, and the description of the other construction, working and effect will be eliminated.

### Embodiment 6

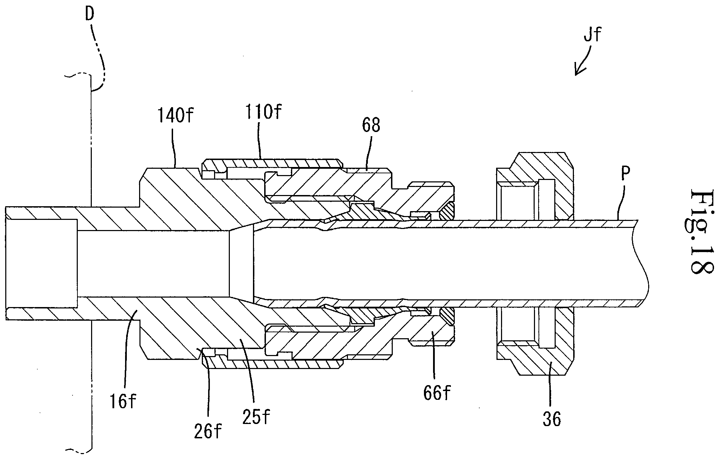

Fig. 18 shows a pipe joint Jf of embodiment 6. The pipe joint Jf of embodiment 6 is also mounted on the indoor unit D as embodiments 2 to 5. The fixing member 66f and the cover 110f of the pipe joint Jf of embodiment 6 are identical with those in embodiment 1 or 5, but the joint body 16f differs from the joint body in embodiment 1 or 5. A front stop portion 26f to prevent forward movement of the cover 110f is formed on the outer periphery of the enlarged diameter portion 25f of the joint body 16f of embodiment 6. The front stop portion 26f is formed at a substantially central position on the enlarged diameter portion 25f in the front-back direction, that is, at a position forward of the loosening male thread 68. The front stop portion 26f is constituted by forming the outer periphery of the enlarged diameter portion 25f into a stepped shape.

A region of the outer periphery of the enlarged diameter portion 25f forward of the front stop portion 26f serves as a jig fitting portion 140f to which a general-purpose jig is fitted and which has a regular hexagonal cross-section. When the clamping nut 36 is disengaged from the fixing member 66f, the cover 110f is displaced forward relative to the fixing member 66f so as to cover a region of the enlarged diameter portion 25f located in the rear of the front stop portion 26f. When the cover 110f is moved forward until abutting against the front end portion 26f, the loosening male thread 68 covered by the cover 110f is exposed. The other construction, working and effect are identical with those in embodiment 1, and the description of the other construction, working and effect will be eliminated.

### Embodiment 7

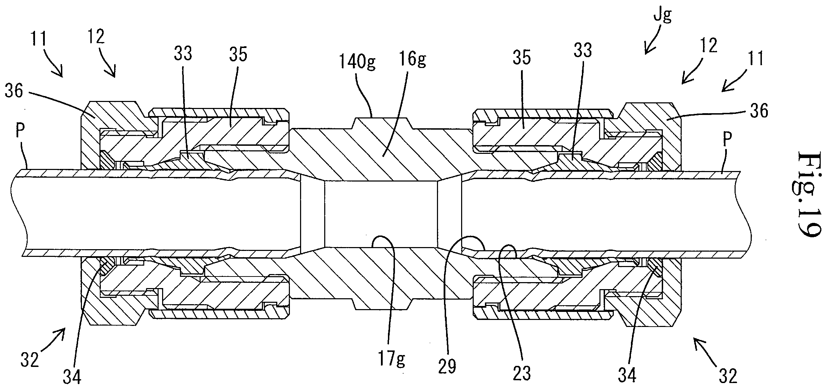

Fig. 19 shows a pipe joint Jg of embodiment 7. The pipe joint Jg of embodiment 7 is applied as a joint unit connecting between the pipe P connected to the outdoor unit B in embodiment 1 and the pipe P connected to the indoor unit D in each of embodiments 2 to 6. The pipe joint Jg of embodiment 7 has a joint body 16g having an interior serving as a through flow path 17g. The joint body 16g has an outer periphery formed with a jig fitting portion 140g to which a general-purpose jig (not shown) is fitted. The joint function units 12 having the same shape as those in embodiment 1 are assembled to an opening at the upstream end side and an opening at the downstream end side of the joint body 16g respectively. The pipe joint Jg of embodiment 7 comprises the joint body 16g and the paired joint function units 12. The pipes P are connected to the joint function units 12 respectively.

A pipe joint (not shown) as a modified form of the pipe joint Jg of embodiment 7 may have a plurality of branches obtained by dividing the flow path 17g of the joint body 16g. As a manner of connecting the pipes P in this case, for example, a single pipe P is connected at the outdoor unit B side and a plurality of pipes P is connected at the indoor unit D side, and the pipe joints can be used as joint units for branching pipes. The other construction, working and effect are identical with those in embodiment 1, and the description of the other construction, working and effect will be eliminated.

### Explanation of Reference Symbols

A ··· closing valve;
B ··· outdoor unit (heat exchanging unit);
C, Ja, Jb, Jc, Jd, Je, Jf, Jg, Jh, Jk, Jm and Jr ··· pipe joint;
D ··· indoor unit (heat exchanging unit);
P ··· pipe;
15 ··· housing;
16, 16b, 16e, 16f and 16g ··· joint body;
17 and 17g ··· flow path;
20 ··· first valving element (valving element);
21 ··· second valving element (valving element);
23 ··· insertion space;
29 ··· front tapered surface (tapered surface);
32 ··· clamping member;
33 ··· ferrule;
34 ··· elastic ring (holding unit);
35, 66a, 66b, 66c, 66d, 66e and 66f ··· fixing member;
66, 81, 85 and 93 ··· fixing member;
36, 82, 86, 88 and 94 ··· clamping nut;
39 ··· pressure receiving portion (screw-in preventing portion, detection portion);
41 ··· locking unit;
48 ··· fitting portion;
49 ··· pressing portion (detection portion);
68 and 68d ··· loosening male thread (loosening thread);
110a, 110b, 110c, 110d, 110e and 110f ··· cover (locking unit);
120 ··· general-purpose tool;
130 ··· loosening tool;
131 ··· communication part;
133 ··· loosening female thread;
134 ··· prevention abutting part (screw-in preventing portion);
270 and 273 ··· elastic ring (holding unit); and
277 ··· guide groove (holding unit).

## Claims

1. A pipe joint (C; Ja; Jb; Jc; Jd; Je; Jf; Jg; Jh; Jk; Jm; Jn; Jp) which includes:
a cylindrical joint body (16; 16b; 16e; 16f; 16g) into which a pipe (P) is inserted and which is configured to be capable of communicating with a refrigerant flow path (17; 17g) of a heat exchanging unit (B, D);
a cylindrical fixing member (35; 66a; 66b; 66c; 66d; 66e; 66f) mounted to the joint body (16; 16b; 16e; 16f; 16g) by screwing;
a ferrule (33) receiving an axial pressing force from the fixing member (35; 66a; 66b; 66c; 66d; 66e; 66f) screwed in a clamping direction, thereby airtightly sealing a gap between an inner periphery of the joint body (16; 16b; 16e; 16f; 16g) and an outer periphery of the pipe (P); and
a clamping nut (36) capable of applying a rotative force in the clamping direction to the fixing member (35; 66a; 66b; 66c; 66d; 66e; 66f) when rotated by fitting a general-purpose tool (120) to a fitting portion (48) formed on an outer periphery thereof, **characterized by**:
a loosening thread (68; 68d) formed on an outer periphery of the fixing member (35; 66a; 66b; 66c; 66d; 66e; 66f) and threaded in a direction opposed to a direction in which the joint body (16; 16b; 16e; 16f; 16g) and the fixing member (35; 66a; 66b; 66c; 66d; 66e; 66f) are threaded; and
a screw-in preventing portion (39; 134) abutting against a loosening tool (130) thereby to prevent further screw-in when the loosening tool (130) is screwed into the loosening thread (68; 68d) and rotated in a direction opposed to a clamping direction of the fixing member (35; 66a; 66b; 66c; 66d; 66e; 66f).

2. The pipe joint (C; Ja; Jb; Jc; Jd; Je; Jf; Jg; Jh; Jk; Jm; Jn; Jp) according to claim 1, wherein the fixing member (35; 66a; 66b; 66c; 66d; 66e; 66f) has a cover (110a; 110b; 110c; 110d; 110e; 110f) mounted thereon to be movable between a protecting position where the cover (110a; 110b; 110c; 110d; 110e; 110f) covers the loosening thread (68; 68d) and an exposing position where the cover (110a; 110b; 110c; 110d; 110e; 110f) exposes the loosening thread (68; 68d).

3. The pipe joint (C; Ja; Jb; Jc; Jd; Je; Jf; Jg; Jh; Jk; Jm; Jn; Jp) according to claim 1 or 2, further **characterized by** a locking unit (41) which prevents the fixing member (35; 66a; 66b; 66c; 66d; 66e; 66f) from rotation in a loosening direction of the fixing member (35; 66a; 66b; 66c; 66d; 66e; 66f) when the rotative force is applied to the fixing member (35; 66a; 66b; 66c; 66d; 66e; 66f) using the general-purpose tool (120), thereby maintaining an airtightly sealed state by the ferrule (33).

4. The pipe joint (C; Ja; Jb; Jc; Jd; Je; Jf; Jg; Jh; Jk; Jm; Jn; Jp) according to claim 1, further **characterized by**:
an insertion space (23) which is defined in the joint body (16; 16b; 16e; 16f; 16g) and into which the pipe (P) is inserted;
a holding unit (34; 270; 273) abutting against the pipe (P) inserted into the insertion space (23) thereby to be capable of holding the pipe (P) in a retained state.

5. The pipe joint (C; Ja; Jb; Jc; Jd; Je; Jf; Jg; Jh; Jk; Jm; Jn; Jp) according to claim 4, wherein the holding unit (34; 270; 273) is disposed at a position facing the insertion space (23).

6. The pipe joint (C; Ja; Jb; Jc; Jd; Je; Jf; Jg; Jh; Jk; Jm; Jn; Jp) according to claim 4 or 5, further **characterized by** a clamping nut (36) screwed into the fixing member (35; 66a; 66b; 66c; 66d; 66e; 66f) so that a screw-in force in the clamping direction is applied thereto, thereby applying to the fixing member (35; 66a; 66b; 66c; 66d; 66e; 66f) a pressing force to the ferrule (33) side, wherein the holding unit (34; 270; 273) is an elastic ring (34; 270; 273) which is disposed to be held between the fixing member (35; 66a; 66b; 66c; 66d; 66e; 66f) and the clamping nut (36) in a direction of axis line and is deformed so that a diameter thereof is reduced by screwing the clamping nut (36) in the clamping direction, thereby adhering to the outer periphery of the pipe (P).

7. The pipe joint (C; Ja; Jb; Jc; Jd; Je; Jf; Jg; Jh; Jk; Jm; Jn; Jp) according to claim 6, wherein the clamping nut (36) and the fixing member (35; 66a; 66b; 66c; 66d; 66e; 66f) are formed with respective detection portions which abut against each other when screw-in of the clamping nut (36) progresses to a state where the pipe (P) can be held by the elastic ring (34; 270; 273).

8. The pipe joint (C; Ja; Jb; Jc; Jd; Je; Jf; Jg; Jh; Jk; Jm; Jn; Jp) according to claim 4, wherein the joint body (16; 16b; 16e; 16f; 16g) has an inner periphery formed with a tapered surface (29) which is diametrically reduced forward with respect to the insertion direction of the pipe (P) and against which a distal end of the pipe (P) normally inserted into the insertion space (23) is abutted, and wherein the holding unit (34; 270; 273) is disposed behind the tapered surface (29).

9. A closing valve comprising:
the pipe joint (C; Ja; Jb; Jc; Jd; Je; Jf; Jg; Jh; Jk; Jm; Jn; Jp) specified in any one of claims 1 to 8;
a housing (15) having the flow path (17; 17g) and mounted to the heat exchanging unit (B, D); and
a valving element (20, 21) opening and closing the flow path (17; 17g), wherein the housing (15) is formed with the joint body (16; 16b; 16e; 16f; 16g).

10. A loosening tool (130) used in combination with a pipe joint (C; Ja;
Jb; Jc; Jd; Je; Jf; Jg; Jh; Jk; Jm; Jn; Jp) which includes:
a cylindrical joint body (16; 16b; 16e; 16f; 16g) into which a pipe (P) is inserted and which is configured to be capable of communicating with a refrigerant flow path (17; 17g) of a heat exchanging unit (B, D);
a cylindrical fixing member (35; 66a; 66b; 66c; 66d; 66e; 66f) mounted to the joint body (16; 16b; 16e; 16f; 16g) by screwing;
a ferrule (33) receiving an axial pressing force from the fixing member (35; 66a; 66b; 66c; 66d; 66e; 66f) screwed in a clamping direction, thereby airtightly sealing a gap between an inner periphery of the joint body (16; 16b; 16e; 16f; 16g) and an outer periphery of the pipe (P);
a clamping nut (36) capable of applying a rotative force in the clamping direction to the fixing member (35; 66a; 66b; 66c; 66d; 66e; 66f) when rotated by fitting a general-purpose tool (120) to a fitting portion (48) formed on an outer periphery thereof;
a loosening thread (68; 68d) formed on an outer periphery of the fixing member (35; 66a; 66b; 66c; 66d; 66e; 66f) and threaded in a direction opposed to a direction in which the joint body (16; 16b; 16e; 16f; 16g) and the fixing member (35; 66a; 66b; 66c; 66d; 66e; 66f) are threaded;
a screw-in preventing portion (39; 134),
the loosening tool (130) being abutted against the screw-in preventing portion (39) thereby to be prevented from further screw-in when screwed into the loosening thread (68; 68d) and rotated in a direction opposed to a clamping direction of the fixing member (35; 66a; 66b; 66c; 66d; 66e; 66f), the loosening tool (130) comprising a single part which is substantially C-shaped as a whole;
a loosening female thread (133) threadingly engageable with the loosening thread (68; 68d); and
a communication part (131) which is formed by cutting out a circumferential part thereof so as to communicate between an outer periphery and an inner periphery thereof, the cutout having a size set to be larger than an outer diameter of the pipe (P).

## Patentansprüche

1. Rohrverbindung (C; Ja; Jb; Jc; Jd; Je; Jf; Jg; Jh; Jk; Jm; Jn; Jp), die umfasst:
einen zylindrischen Verbindungskörper (16; 16b; 16e; 16f; 16g), in den ein Rohr (P) eingesetzt ist, und der derart aufgebaut ist, dass er fähig ist, mit einem Kältemittelströmungsweg (17; 17g) einer Wärmeaustauscheinheit (B, D) in Verbindung zu stehen;
ein zylindrisches Fixierungselement (35; 66a; 66b; 66c; 66d; 66e; 66f), das durch Schrauben an dem Verbindungskörper (16; 16b; 16e; 16f; 16g) montiert ist;
eine Muffe (33), die eine axiale Druckkraft von dem Fixierungselement (35; 66a; 66b; 66c; 66d; 66e; 66f) empfängt, das in eine Spannrichtung geschraubt wird, wodurch eine Lücke zwischen einem Innenumfang des Verbindungskörpers (16; 16b; 16e; 16f; 16g) und einem Außenumfang des Rohrs (P) luftdicht abgedichtet wird; und
eine Spannmutter (36), die fähig ist, eine Drehkraft in der Spannrichtung auf das Fixierungselement (35; 66a; 66b; 66c; 66d; 66e; 66f) anzuwenden, wenn sie durch Montieren eines Universalwerkzeugs (120) an einen Montageabschnitt (48), der auf ihrem Außenumfang ausgebildet ist, gedreht wird, **gekennzeichnet durch**:
ein Lösegewinde (68; 68d), das auf einem Außenumfang des Fixierungselements (35; 66a; 66b; 66c; 66d; 66e; 66f) ausgebildet ist und in eine Richtung gewunden ist, die zu einer Richtung entgegengesetzt ist, in welcher der Verbindungskörper (16; 16b; 16e; 16f; 16g) und das Fixierungselement (35; 66a; 66b; 66c; 66d; 66e; 66f) gewunden sind; und
einen Einschraubverhinderungsabschnitt (39; 134), der gegen ein Lösewerkzeug (130) anliegt, um dadurch das weitere Einschrauben zu verhindern, wenn das Lösewerkzeug in das Lösegewinde (68; 68d) geschraubt und in eine Richtung entgegengesetzt zu einer Spannrichtung des Fixierungselements (35; 66a; 66b; 66c; 66d; 66e; 66f) gedreht wird.

2. Rohrverbindung (C; Ja; Jb; Jc; Jd; Je; Jf; Jg; Jh; Jk; Jm; Jn; Jp) nach Anspruch 1, wobei das Fixierungselement (35; 66a; 66b; 66c; 66d; 66e; 66f) eine Abdeckung (110a; 110b; 110c; 110d; 110e; 110f) hat, die derart darauf montiert ist, dass sie zwischen einer Schutzposition, in der die Abdeckung (110a; 110b; 110c; 110d; 110e; 110f) das Lösegewinde (68; 68d) bedeckt, und einer freiliegenden Position, in der die Abdeckung (110a; 110b; 110c; 110d; 110e; 110f) das Lösegewinde (68; 68d) freilegt, beweglich ist.

3. Rohrverbindung (C; Ja; Jb; Jc; Jd; Je; Jf; Jg; Jh; Jk; Jm; Jn; Jp) nach Anspruch 1 oder 2, die ferner durch eine Sperreinheit (41) gekennzeichnet ist, die verhindert, dass das Fixierungselement (35; 66a; 66b; 66c; 66d; 66e; 66f) sich in einer Löserichtung des Fixierungselements (35; 66a; 66b; 66c; 66d; 66e; 66f) dreht, wenn unter Verwendung des Universalwerkzeugs (120) die Drehkraft auf das Fixierungselement (35; 66a; 66b; 66c; 66d; 66e; 66f) angewendet wird, wodurch die Muffe (33) in einem luftdicht abgedichteten Zustand aufrecht erhalten wird.

4. Rohrverbindung (C; Ja; Jb; Jc; Jd; Je; Jf; Jg; Jh; Jk; Jm; Jn; Jp) nach Anspruch 1, ferner **gekennzeichnet durch**:
einen Einsetzraum (23), der in dem Verbindungskörper (16; 16b; 16e; 16f; 16g) definiert ist und in den das Rohr (P) eingesetzt ist;
eine Halteeinheit (34; 270; 273), die gegen das in den Einsetzraum (23) eingesetzte Rohr (P) anliegt, um fähig zu sein, das Rohr (P) in einem festgehaltenen Zustand zu halten.

5. Rohrverbindung (C; Ja; Jb; Jc; Jd; Je; Jf; Jg; Jh; Jk; Jm; Jn; Jp) nach Anspruch 4, wobei die Halteeinheit (34; 270; 273) an einer Position angeordnet ist, die dem Einsetzraum (23) zugewandt ist.

6. Rohrverbindung (C; Ja; Jb; Jc; Jd; Je; Jf; Jg; Jh; Jk; Jm; Jn; Jp) nach Anspruch 4 oder 5, ferner **gekennzeichnet durch** eine Spannmutter (36), die in das Fixierungselement (35; 66a; 66b; 66c; 66d; 66e; 66f) geschraubt wird, so dass eine Einschraubkraft in der Spannrichtung darauf angewendet wird, wodurch eine Druckkraft auf die Seite der Muffe (33) auf das Fixierungselement (35; 66a; 66b; 66c; 66d; 66e; 66f) angewendet wird, wobei die Halteeinheit (34; 270; 273) ein elastischer Ring (34; 270; 273) ist, der derart angeordnet ist, dass er in einer Richtung der Achsenlinie zwischen dem Fixierungselement (35; 66a; 66b; 66c; 66d; 66e; 66f) und der Spannmutter (36) gehalten wird und derart verformt wird, dass sein Durchmesser durch Schrauben der Spannmutter (36) in die Spannrichtung verringert wird, wodurch er an dem Außenumfang des Rohrs (P) haftet.

7. Rohrverbindung (C; Ja; Jb; Jc; Jd; Je; Jf; Jg; Jh; Jk; Jm; Jn; Jp) nach Anspruch 6, wobei die Spannmutter (36) und das Fixierungselement (35; 66a; 66b; 66c; 66d; 66e; 66f) mit jeweiligen Erkennungsabschnitten ausgebildet sind, die gegeneinander anliegen, wenn das Einschrauben der Spannmutter (36) in einen Zustand fortschreitet, in dem das Rohr (P) durch den elastischen Ring (34; 270; 273) gehalten wird.

8. Rohrverbindung (C; Ja; Jb; Jc; Jd; Je; Jf; Jg; Jh; Jk; Jm; Jn; Jp) nach Anspruch 4, wobei der Verbindungskörper (16; 16b; 16e; 16f; 16g) einen Innenumfang hat, der mit einer angeschrägten Fläche (29) ausgebildet ist, die in Bezug auf die Einsetzrichtung des Rohrs (P) nach vorn diametral verkleinert ist und gegen die ein distales Ende des Rohrs (P), das normal in den Einsetzraum (23) eingesetzt ist, anliegt, und wobei die Halteeinheit (34; 270; 273) hinter der angeschrägten Fläche (29) angeordnet ist.

9. Schließventil, das umfasst:
die Rohrverbindung (C; Ja; Jb; Jc; Jd; Je; Jf; Jg; Jh; Jk; Jm; Jn; Jp) nach einem der Ansprüche 1 bis 8;
ein Gehäuse (15) mit dem Strömungsweg (17; 17g), das an die Wärmeaustauscheinheit (B, D) montiert ist; und
ein Ventileinschraubelement (20, 21), das den Strömungsweg (17, 17g) öffnet und schließt, wobei das Gehäuse (15) mit dem Verbindungskörper (16; 16b; 16e; 16f; 16g) ausgebildet ist.

10. Lösewerkzeug (130), das in Verbindung mit einer Rohrverbindung (C; Ja; Jb; Jc; Jd; Je; Jf; Jg; Jh; Jk; Jm; Jn; Jp) verwendet wird, die umfasst:
einen zylindrischen Verbindungskörper (16; 16b; 16e; 16f; 16g), in den ein Rohr (P) eingesetzt ist, und der derart aufgebaut ist, dass er fähig ist, mit einem Kältemittelströmungsweg (17; 17g) einer Wärmeaustauscheinheit (B, D) in Verbindung zu stehen;
ein zylindrisches Fixierungselement (35; 66a; 66b; 66c; 66d; 66e; 66f), das durch Schrauben an dem Verbindungskörper (16; 16b; 16e; 16f; 16g) montiert ist;
eine Muffe (33), die eine axiale Druckkraft von dem Fixierungselement (35; 66a; 66b; 66c; 66d; 66e; 66f) empfängt, das in einer Spannrichtung geschraubt wird, wodurch eine Lücke zwischen einem Innenumfang des Verbindungskörpers (16; 16b; 16e; 16f; 16g) und einem Außenumfang des Rohrs (P) luftdicht abgedichtet wird; und
eine Spannmutter (36), die fähig ist, eine Drehkraft in der Spannrichtung auf das Fixierungselement (35; 66a; 66b; 66c; 66d; 66e; 66f) anzuwenden, wenn sie durch Montieren eines Universalwerkzeugs (120) an einen Montageabschnitt (48), der auf ihrem Außenumfang ausgebildet ist, gedreht wird, **gekennzeichnet durch**:
ein Lösegewinde (68; 68d), das auf einem Außenumfang des Fixierungselements (35; 66a; 66b; 66c; 66d; 66e; 66f) ausgebildet ist und in eine Richtung gewunden ist, die zu einer Richtung entgegengesetzt ist, in welcher der Verbindungskörper (16; 16b; 16e; 16f; 16g) und das Fixierungselement (35; 66a; 66b; 66c; 66d; 66e; 66f) gewunden sind;
einen Einschraubverhinderungsabschnitt (39; 134),
wobei das Lösewerkzeug (130) gegen den Einschraubverhinderungsabschnitt (39) anliegt, um dadurch davon abgehalten zu werden, weiter eingeschraubt zu werden, wenn es in das Lösegewinde (68; 68d) geschraubt und in eine Richtung entgegengesetzt zu einer Spannrichtung des Fixierungselements (35; 66a; 66b; 66c; 66d; 66e; 66f) gedreht wird, wobei das Lösewerkzeug (130) einen einzigen Teil umfasst, der als Ganzes im Wesentlichen C-förmig ist;
ein aufnehmendes Lösegewinde (133), das schraubend mit dem Lösegewinde (68; 68d) in Eingriff bringbar ist; und
einen Verbindungsteil (131), der ausgebildet wird, indem sein Umfangsteil ausgeschnitten wird, um zwischen seinem Außenumfang und seinem Innenumfang zu verbinden, wobei der Ausschnitt eine Größe hat, die größer als ein Außendurchmesser des Rohrs (P) festgelegt ist.

## Revendications

1. Joint de tuyau (C ; Ja ; Jb ; Jc ; Jd ; Je ; Jf ; Jg ; Jh ; Jk ; Jm ; Jn ; Jp) qui inclut :
un corps de joint cylindrique (16 ; 16b ; 16e ; 16f ; 16g) dans lequel un tuyau (P) est inséré et qui est configuré pour être capable de communiquer avec un trajet d'écoulement de réfrigérant (17 ; 17g) d'un module échangeur de chaleur (B, D);
un élément de fixation cylindrique (35 ; 66a ; 66b ; 66c ; 66d ; 66e ; 66f) monté sur le corps de joint (16 ; 16b ; 16e ; 16f ; 16g) par vissage ;
une bague (33) recevant une force de pression axiale de l'élément de fixation (35 ; 66a ; 66b ; 66c ; 66d ; 66e ; 66f) vissé dans une direction de serrage, scellant de ce fait de manière étanche à l'air un espace entre une périphérie interne du corps de joint (16 ; 16b ; 16e ; 16f ; 16g) et une périphérie externe du tuyau (P) ; et
un écrou de serrage (36) capable d'appliquer une force rotative dans la direction de serrage à l'élément de fixation (35 ; 66a ; 66b ; 66c ; 66d ; 66e ; 66f) lors de la rotation en ajustant un outil universel (120) sur une portion d'ajustement (48) formée sur une périphérie externe de celui-ci, **caractérisé par** :
un filet de desserrage (68 ; 68d) formé sur une périphérie externe de l'élément de fixation (35 ; 66a ; 66b ; 66c ; 66d ; 66e ; 66f) et fileté dans une direction opposée à une direction dans laquelle le corps de joint (16 ; 16b ; 16e ; 16f ; 16g) et l'élément de fixation (35 ; 66a ; 66b ; 66c ; 66d ; 66e ; 66f) sont filetés ; et
une portion de prévention de vissage (39 ; 134) butant contre un outil de desserrage (130) pour empêcher de ce fait un vissage supplémentaire lorsque l'outil de desserrage (130) est vissé dans le filet de desserrage (68 ; 68d) et tourné dans une direction opposée à une direction de serrage de l'élément de fixation (35 ; 66a ; 66b ; 66c ; 66d ; 66e ; 66f).

2. Joint de tuyau (C ; Ja ; Jb ; Jc ; Jd ; Je ; Jf ; Jg ; Jh ; Jk ; Jm ; Jn ; Jp) selon la revendication 1, dans lequel l'élément de fixation (35 ; 66a ; 66b ; 66c ; 66d ; 66e ; 66f) a un recouvrement (110a ; 110b ; 110c ; 110d ; 110e ; 110f) monté sur lui pour être mobile entre une position de protection où le recouvrement (110a ; 110b ; 110c ; 110d ; 110e ; 110f) recouvre le filet de desserrage (68 ; 68d) et une position d'exposition où le recouvrement (110a ; 110b ; 110c; 110d ; 110e; 110f) expose le filet de desserrage (68 ; 68d).

3. Joint de tuyau (C ; Ja ; Jb ; Jc ; Jd ; Je ; Jf; Jg ; Jh ; Jk ; Jm ; Jn ; Jp) selon la revendication 1 ou 2, **caractérisé en outre par** un module de verrouillage (41) qui empêche l'élément de fixation (35 ; 66a ; 66b ; 66c ; 66d ; 66e ; 66f) de tourner dans une direction de desserrage de l'élément de fixation (35 ; 66a ; 66b ; 66c ; 66d ; 66e ; 66f) lorsque la force rotative est appliquée à l'élément de fixation (35 ; 66a ; 66b ; 66c ; 66d ; 66e ; 66f) en utilisant l'outil universel (120), maintenant de ce fait un état scellé de manière étanche à l'air par la bague (33).

4. Joint de tuyau (C ; Ja ; Jb ; Jc ; Jd ; Je ; Jf ; Jg ; Jh ; Jk ; Jm ; Jn ; Jp) selon la revendication 1, **caractérisé en outre par** :
un espace d'insertion (23) qui est défini dans le corps de joint (16 ; 16b ; 16e ; 16f ; 16g) et dans lequel le tuyau (P) est inséré ;
un module de maintien (34 ; 270 ; 273) butant contre le tuyau (P) inséré dans l'espace d'insertion (23) pour être capable de ce fait de maintenir le tuyau (P) dans un état retenu.

5. Joint de tuyau (C ; Ja ; Jb ; Jc ; Jd ; Je ; Jf; Jg ; Jh ; Jk ; Jm ; Jn ; Jp) selon la revendication 4, dans lequel le module de maintien (34 ; 270 ; 273) est disposé à une position tournée vers l'espace d'insertion (23).

6. Joint de tuyau (C ; Ja ; Jb ; Jc ; Jd ; Je ; Jf ; Jg ; Jh ; Jk ; Jm ; Jn ; Jp) selon la revendication 4 ou 5, **caractérisé en outre par** un écrou de serrage (36) vissé dans l'élément de fixation (35 ; 66a ; 66b ; 66c ; 66d ; 66e ; 66f) de sorte qu'une force de vissage dans la direction de serrage est appliquée à celui-ci, appliquant de ce fait à l'élément de fixation (35 ; 66a ; 66b ; 66c ; 66d ; 66e ; 66f) une force de pression sur le côté de la bague (33), dans lequel le module de maintien (34 ; 270 ; 273) est un anneau élastique (34 ; 270 ; 273) qui est disposé pour être maintenu entre l'élément de fixation (35 ; 66a ; 66b ; 66c ; 66d ; 66e ; 66f) et l'écrou de serrage (36) dans une direction de ligne axiale et est déformé de sorte qu'un diamètre de celui-ci est réduit en vissant l'écrou de serrage (36) dans la direction de serrage, adhérant de ce fait à la périphérie externe du tuyau (P).

7. Joint de tuyau (C ; Ja ; Jb ; Jc ; Jd ; Je ; Jf ; Jg ; Jh ; Jk ; Jm ; Jn ; Jp) selon la revendication 6, dans lequel l'écrou de serrage (36) et l'élément de fixation (35 ; 66a ; 66b ; 66c ; 66d ; 66e ; 66f) sont formés de portions de détection respectives qui butent les unes contre les autres lorsque le vissage de l'écrou de serrage (36) progresse à un état où le tuyau (P) peut être maintenu par l'anneau élastique (34 ; 270 ; 273).

8. Joint de tuyau (C ; Ja ; Jb ; Jc ; Jd ; Je ; Jf ; Jg ; Jh ; Jk ; Jm ; Jn ; Jp) selon la revendication 4, dans lequel le corps de joint (16 ; 16b ; 16e ; 16f ; 16g) a une périphérie interne formée d'une surface conique (29) qui est réduite diamétralement vers l'avant par rapport à la direction d'insertion du tuyau (P) et contre laquelle une extrémité distale du tuyau (P) normalement insérée dans l'espace d'insertion (23) vient en butée, et dans lequel le module de maintien (34 ; 270 ; 273) est disposé derrière la surface conique (29).

9. Soupape d'arrêt comprenant :
le joint de tuyau (C ; Ja ; Jb ; Jc ; Jd ; Je ; Jf ; Jg ; Jh ; Jk ; Jm ; Jn ; Jp) spécifié dans l'une quelconque des revendications 1 à 8 ;
un logement (15) ayant le trajet d'écoulement (17 ; 17g) et monté sur le module échangeur de chaleur (B ; D) ; et
un élément de soupape (20, 21) ouvrant et fermant le trajet d'écoulement (17 ; 17g), dans laquelle le logement (15) est formé du corps de joint (16 ; 16b ; 16e ; 16f ; 16g).

10. Outil de desserrage (130) utilisé en combinaison avec un joint de tuyau (C ; Ja ; Jb ; Je ; Jd ; Je ; Jf ; Jg ; Jh ; Jk ; Jm ; Jn ; Jp) qui inclut :
un corps de joint cylindrique (16 ; 16b ; 16e ; 16f ; 16g) dans lequel un tuyau (P) est inséré et qui est configuré pour être capable de communiquer avec un trajet d'écoulement de réfrigérant (17 ; 17g) d'un module échangeur de chaleur (B, D);
un élément de fixation cylindrique (35 ; 66a ; 66b ; 66c ; 66d ; 66e ; 66f) monté sur le corps de joint (16 ; 16b ; 16e ; 16f ; 16g) par vissage ;
une bague (33) recevant une force de pression axiale de l'élément de fixation (35 ; 66a ; 66b ; 66c ; 66d ; 66e ; 66f) vissé dans une direction de serrage, scellant de ce fait de manière étanche à l'air un espace entre une périphérie interne du corps de joint (16 ; 16b ; 16e ; 16f ; 16g) et une périphérie externe du tuyau (P) ;
un écrou de serrage (36) capable d'appliquer une force rotative dans la direction de serrage à l'élément de fixation (35 ; 66a ; 66b ; 66c ; 66d ; 66e ; 66f) lors de la rotation en ajustant un outil universel (120) sur une portion d'ajustement (48) formée sur une périphérie externe de celui-ci ;
un filet de desserrage (68 ; 68d) formé sur une périphérie externe de l'élément de fixation (35 ; 66a ; 66b ; 66c ; 66d ; 66e ; 66f) et fileté dans une direction opposée à une direction dans laquelle le corps de joint (16 ; 16b ; 16e ; 16f ; 16g) et l'élément de fixation (35 ; 66a ; 66b ; 66c ; 66d ; 66e ; 66f) sont filetés ; une portion de prévention de vissage (39 ; 134),
l'outil de desserrage (130) venant en butée contre la portion de prévention de vissage (39) pour être empêché de ce fait d'un vissage supplémentaire lors du vissage dans le filet de desserrage (68 ; 68d) et de la rotation dans une direction opposée à une direction de serrage de l'élément de fixation (35 ; 66a ; 66b ; 66c ; 66d ; 66e ; 66f), l'outil de desserrage (130) comprenant une partie unique qui est essentiellement en forme de C dans l'ensemble ;
un filet femelle de desserrage (133) pouvant être engagé par filetage avec le filet de desserrage (68 ; 68d) ; et
une partie de communication (131) qui est formée en découpant une partie circonférentielle de celle-ci de manière à communiquer enter une périphérie externe et une périphérie interne de celle-ci, la découpe ayant une taille réglée pour être supérieure à un diamètre externe du tuyau (P).
